# EUROPÄISCHE PATENTSCHRIFT

(11) **EP 3 634 866 B1**
(45) Veröffentlichungstag und Bekanntmachung des Hinweises auf die Patenterteilung: **16.08.2023**
(21) Anmeldenummer: 18739454.9
(22) Anmeldetag: 08.06.2018
(51) Int. Cl.: B65D 3/04, B32B 27/10, B65D 3/14, B65D 3/22, B32B 7/12, B29C 53/48, B31C 3/00, B31C 1/06

(54) **VERFAHREN ZUR HERSTELLUNG EINER DOSE**
METHOD OF MANUFACTURING A PRESSURE-RESISTANT CONTAINER
PROCÉDÉ DE FABRICATION D'UNE BOÎTE RÉSISTANTE À LA PRESSION

(30) Priorität: 09.06.2017 WO PCT/EP2017/064158
(43) Veröffentlichungstag der Anmeldung: 15.04.2020
(60) Teilanmeldung: 23183403.7
(73) Patentinhaber: ENVICAN GmbH, 8482 Sennhof (CH)
(72) Erfinder: DREGGER, Thomas, 8404 Winterthur/ Zuerich (CH); SCHÖNIG, Christoph, 8404 Winterthur/ Zuerich (CH)
(74) Vertreter: Burgstaller, Peter
(86) Internationale Anmeldenummer: PCT/EP2018/065183
(87) Internationale Veröffentlichungsnummer: WO 2018/224658

(56) Entgegenhaltungen:
- EP-A- 0 163 492
- EP-A1- 0 166 667
- EP-A2- 0 038 488
- WO-A1-99/59882
- WO-A1-2007/135234
- WO-A1-2013/016153
- DE-U1-202007 010 192
- FR-A1- 2 618 726
- GB-A- 683 206
- GB-A- 2 449 747
- JP-A- S5 937 139
- US-A- 2 641 827
- US-A1- 2004 052 987
- US-A1- 2009 123 677

## Beschreibung

Die Erfindung betrifft ein Verfahren zur Herstellung einer Dose.

Die nach dem Verfahren hergestellte Dose ist insbesondere eine Dose für die Verpackung von unter Überdruck stehenden Medien bzw. von Medien die bei Lagerung, Transport oder Verwendung einen solchen entwickeln können. Die Erfindung betrifft somit ein Verfahren zur Herstellung eines Fluidbehälters, insbesondere auch einen Getränkebehälter, der auch für ausgasende Dosen-Getränke wie etwa kohlensäurehaltige Mineralwässer, Süßgetränke, Energy-Drinks oder Biere einsetzbar ist, weil er für diese Zwecke als Besonderheit hinreichend druckfest ist. Vorteilhaft wird ermöglicht, dass mit dem Einsatz einer derartigen Getränkedose die Getränkeabfüller und vor allem die Dosenabfüller die Gebinde vor Ort und bedarfsweise herstellen können, vorzugsweise im Gleichtakt mit einer bestehenden Abfüllanlage. Damit sparen sie viel Platz und Lagerhaltungskosten und werden unabhängig von der Anlieferung von Leergut. Vorteilhaft müssen herkömmliche Dosenabfüller für die Einführung dieses neuen Fluidbehälters oder Getränkebehälters ihre Dosenabfüll- Anlagen nicht umbauen, sondern können sie nahtlos weiterverwenden. Es wird ihnen die eigene Herstellung der Dosen ermöglicht, und der Platzbedarf hierfür beträgt einen kleinen Bruchteil des Raumbedarfs für die bisher unerlässlichen Pufferlager an leeren Aluminium-Dosen für deren spätere Befüllung.

Gemäß heutiger Praxis werden die Aluminiumdosen an einem geeigneten Ort zentral hergestellt und in leerem Zustand zu den verschiedenen Dosenabfüllern angeliefert. Man transportiert notgedrungen enorme Mengen von Leergut und somit Luft in der Landschaft herum, was wenig sinnvoll ist. Weil die Dosenabfüller stets genügend Leergut vorrätig haben müssen, um Engpässe beim Abfüllen sicher zu vermeiden, sind sie zum Unterhalt großer Lager mit entsprechendem Raumbedarf und zu einer entsprechenden Kapitalbindung gezwungen. Die Dosen werden dann vor Ort befüllt und vom Abfüllerbetrieb mit einem Deckel verschlossen.

In der Verpackungsindustrie sind mehrlagige Verpackungen mit einem Verpackungsmantel aus Papier- oder Kartonverbundmaterial bekannt, deren einzelne Lagen entweder gerade oder schräg um die Längsrichtung eines Dorns gewickelt werden und somit entweder in Längsrichtung des Verpackungsmantels verlaufende Stoßbereiche mit sich selbst aufweisen, oder spiralförmig um die Längsrichtung des Verpackungsmantels verlaufende Stoßbereiche mit sich selbst aufweisen. Diese Verpackungen können eine innere Barriereschicht aufweisen, welche im Stoßbereich ihrer beiden Ränder eine dichte Faltnaht aufweist. Als Verbundmaterial der Lagen werden allgemein Karton und Papiermaterialien verwendet. Solche Dosenmäntel wurden bislang zu allgemeinen Verpackungszwecken eingesetzt, beispielsweise zur Verpackung von Pulvern, wie Waschmittel, Kakaopulver, oder für Snacks, wie Chips, wobei im Fall von Lebensmittel die Barriereschicht zum einen das Lebensmittel vor dem Eindringen von Flüssigkeiten und Gasen von außen schützt und zum anderen das Entweichen von Flüssigkeiten und Gasen aus dem Lebensmittel bzw. aus dem Inneren des Verpackungsmantels verhindern.

Mittlerweile existieren viele Verbundverpackungen mit einem Dosenmantel aus Verbundmaterial für Speisen als auch Getränke. Jedoch stoßen diese im Bereich der Druckfestigkeit an ihre Grenzen, sodass diese bislang nicht für unter Druck stehende Medien, insbesondere kohlensäurehaltige Getränke verwendet wurden. In der Patentliteratur finden sich zwar Vorschläge für derartige Dosenmäntel aus Verbundmaterial für kohlensäurehaltige Getränke, beispielsweise in der WO 9959882 A9 und der EP 0101139 A2, jedoch haben es bislang keine derartigen Produkte auf den Markt geschafft. Eventuell weil bei den vorgeschlagenen Dosenmänteln und/oder fertigen Dosen die Druckfestigkeit nicht ausreichend hoch erzielt werden konnte, oder weil diese vorgeschlagenen Dosenmäntel und/oder fertigen Dosen nicht konkurrenzfähig zu den herkömmlichen Getränkedosen, wie insbesondere Aludosen waren.

Nachteilig an den in der WO 9959882 A9 beschriebenen Verpackungen für kohlensäurehaltige Getränke sind deren spezielle Formen, welche einerseits eigene Füll- und Verschlussanlagen erfordern und andererseits von der dem Konsumenten vertrauten Form einer Getränkedose abweichen.

Nachteilig an den in der EP 0101139 A2 beschriebenen Verpackungen für kohlensäurehaltige Getränke sind deren spezielle Formen, welche einerseits eigene Füll- und Verschlussanlagen erfordern und andererseits von der dem Konsumenten vertrauten Form einer Getränkedose, insbesondere im Bereich des Bodens und des Deckels, abweichen.

Die FR2618726A1 offenbart Dosen, wie sie im Oberbegriff des Anspruchs 1 beansprucht werden und betrifft ein inneres Barrierematerial für eine schlauchförmige Verpackung, wobei die erfindungsgemäße Lösung der FR2618726A1 beinhaltet, dass im Barriereverbund keine Aluminiumschicht enthalten ist.

Die US2641827A betrifft eine Dose mit einem Mantel aus Fasermaterial mit Metallverschlüssen. Der mehrlagige Mantel resultiert, indem ein einzelnes Blatt mehrmals radial um einen Dorn gewickelt wird.

Aus der DE202007010192U1 ist eine Verbunddose für kohlensäurehaltige Getränke bekannt, deren Mantel hauptsächlich aus Papier- bzw. Kartonmaterial besteht, wobei die Wandstärke mit 0,5545 mm angegeben ist. Nachteilig an der DE202007010192U1 ist, dass der Mantel aus einem beidseitig beschichteten dicken Sulfatkarton besteht, welcher sich selbst überlappt, was einen gegenüber dem restlichen Mantel stark verbreiteten Abschnitt zur Folge hat. Nachteilig ist zudem, dass der seitliche Rand der inneren und äußeren Kante des Laminats frei liegt und somit zusätzlich abgedichtet werden muss, beispielsweise durch ein Tape.

In der WO2012155890A1 wird eine Verpackung für kohlensäurehaltige Getränke beschrieben, mit einem Mantel aus Verbundmaterial, wobei der Mantel großteils aus Papier bzw. Kartonmaterial besteht. Die Mantelstärke (bzw. Schichtdicke) des Verbundmantels der Dose beträgt zwischen 0,5 bis 0,8 mm, wobei die Dicke der Barrierefolie 50-120µm beträgt. Nachteilig an der WO2012155890A1 ist, dass sich das gesamte Laminat selbst überlappt, was einen gegenüber dem restlichen Mantel stark verbreiteten Abschnitt zur Folge hat. Nachteilig ist zudem, dass der seitliche Rand der inneren und äußeren Kante des Laminats frei liegt und somit zusätzlich abgedichtet werden muss, beispielsweise durch ein Tape.

Aus der US 3687351 A1 ist eine Verbunddose für kohlensäurehaltige Getränke bekannt, deren Mantel hauptsächlich aus Papier- bzw. Kartonmaterial besteht, wobei die Mantelstärke ca. 0,48 mm beträgt, wobei nachteilig ist, dass der Schichtaufbau eine dicke Aluminiumschicht mit ca. 25µm Schichtdicke aufweist.

In der US 4642252 und EP 0163492 A werden Verpackungen für kohlensäurehaltige Getränke mit Mänteln aus Verbundmaterial beschrieben, wobei der Mantel großteils aus Papier bzw. Kartonmaterial bestehen kann. Die Mantelstärke des Ausführungsbeispiels gemäß Fig. 1, Fig. 8 und Fig. 9 beträgt jeweils ca. 900µm also 0,9 mm. Nachteilig and der US 4642252 ist, dass die innerste Lage, nämlich die Barriereschicht spiralförmig gewickelt ist, was die Länge deren Faltnaht erhöht.

In der US 4766019 wird eine Dose für kohlensäurehaltige Getränke vorgeschlagen, welche einen Mantel aus mehreren Lagen von Kunststoffschichten aufweist. Die Mantelstärke (bzw. Schichtdicke) des Mantels wird in einem Ausführungsbeispiel mit 22mils also ca. 0,56 mm angegeben. In der US 4766019 ist angegeben, dass die Mantelstärke unter 30mils (0.762mm) betragen soll, damit der Kunststoffmantel mit herkömmlichen Aluminiumdeckeln verschließbar ist. Nachteilig ist, dass der Mantel gänzlich aus Kunststoff gebildet ist, was wenig nachhaltig scheint. Die innerste Barriereschicht wird bei der US 4766019 auf einen Dorn extrudiert.

Die US4181239A zeigt ebenfalls eine Dose mit Kunststoffmantel, wobei nachteilig ist, dass der Dosenmantel rein aus Kunststoffschichten aufgebaut ist. In der US4181239A ist angegeben, dass die Mantelstärke zwischen 85 und 770 µm betragen soll, bevorzugt zwischen 100 und 400 µm.

Aus dem Stand der Technik geht hervor, dass erkannt wurde, dass der Dosenmantel eine gewisse Dicke nicht überschreiten darf, damit dieser noch mit Standard-Aluminiumdosendeckeln von herkömmlichen Aludosen verschließbar ist. Zweitens wurde scheinbar zumindest bei den Dosenmänteln aus mehreren gewickelten Einzellagen erkannt, dass der Dosenmantel keine großen Abweichungen in seiner Schichtdicke über den Umfang gesehen aufweisen soll. Um dies zu erreichen wird die innerste Lage als dünne Kunststofffolie bzw. aus einem Laminat aus unterschiedlichen Kunststofffolien und eventuell einer Aluminiumfolie ausgeführt, was der US4181239A, der US 4766019, und der US 4642252 entnommen werden kann. Bei der US 4642252 ist zudem vorgesehen, dass die spiralförmige Faltnaht des Barrierelaminats aus Kunststofffolien und einer Aluminiumfolie von einer Zwischenschicht aus Papier kaschiert wird.

Als nachteilig hat sich herausgestellt, dass bei Papier- oder Kartonverbunddosenmänteln aus gewickelten Einzellagen der Halt zwischen dem Barrierelaminat aus Kunststofffolien und gegebenenfalls einer Aluminiumfolie und der nachfolgenden Lage aus Papier- oder Kartonmaterial für die Verwendung als Verpackung für unter Druck stehende Medien, insbesondere kohlensäurehaltige Getränke, unzureichend ist, was insbesondere im Bereich der Faltnaht zu Schäden führen kann, welche zu einer Undichtheit führen, was wiederum durch das Nasswerden des Papier- oder Kartonmaterials zum Reißen oder Platzen des Dosenmantels führt.

Die der Erfindung zu Grunde liegende Aufgabe besteht darin, ein Verfahren zur Herstellung eines markttauglichen Dosenmantels aus Verbundmaterial für eine Dose für unter Druck stehende Medien, insbesondere kohlensäurehaltige Getränke zu schaffen, der dem herrschenden bzw. möglichen Innendruck solcher Medien zuverlässig standhalten kann und hauptsächlich aus Papier- bzw. Kartonmaterial besteht. Weiter soll der Fluidbehälter bedarfsweise zeitgerecht und ohne großen Platzbedarf dezentral mit geringem technischen und energetischen Aufwand bei einem Dosenabfüller-Betrieb herstellbar sein, wobei seine Herstellung gegebenenfalls auch in Echtzeit mit einer Abfüllanlage koppelbar sein kann.

Für das Lösen der Aufgabe wird ein Verfahren nach Anspruch 1 vorgeschlagen.

Durch das Verfahren wird eine Dose Hergestellt, enthaltend ein flüssiges und/oder ein gasförmiges Medium, das Überdruck aufweisen kann oder bei Transport oder Lagerung einen solchen entwickeln kann, wobei der zylindrische Dosenmantel der Dose hauptsächlich aus Papier- bzw. Kartonmaterial besteht und zumindest zwei gewickelte Lagen umfasst und unten mit einem Bodenelement und oben mit einem Deckel verschlossen ist, wobei die innerste Lage des Dosenmantels aus einer gerade gewickelten Barrierelage besteht, welche eine in Längsrichtung der Dose verlaufende Faltnaht mit sich selbst aufweist, wobei die Barrierelage ein Laminat aus einer innenliegenden diffusionsdichten Folie oder einem innenliegenden diffusionsdichten Barrierelaminat und einer außenliegenden Kraftpapierschicht ist, wobei um die Barrierelage des Dosenmantels zumindest eine weitere gewickelte Lage aus Papier- bzw. Kartonmaterial vorliegt, wobei die aneinander-liegenden Karton- bzw. Papieroberflächen der Barrierelage und der gewickelte Lage aus Papier- bzw. Kartonmaterial direkt aneinander verklebt, insbesondere verleimt, sind.

Dadurch, dass die innerste Lage gerade gewickelt ist und somit eine gerade Faltnaht mit sich selbst aufweist und eine stabile Schicht aus Kraftpapier enthält, wird vorteilhaft erreicht, dass diese innerste Lage und insbesondere deren Faltnaht die nötige Stabilität aufweist, um hohen Innendrücken der Dose Stand zu halten.

Dadurch dass die Barrierelage als Laminat aus Folie und Kraftpapier gebildet ist, wird die Folie im Bereich der Faltnaht entlastet, da die Zugkräfte vom Kraftpapier abgeleitet werden, wobei durch die gerade verlaufende Faltnaht die Zugkräfte vorteilhaft in Umfangsrichtung wirken und keine zusätzlichen Kräfte in Längsrichtung der Dose eingebracht werden, wie dies bei Spiralwicklung der innersten Lage bzw. der Barrierelage der Fall wäre.

Dadurch, dass die innerste Lage außen aus Papiermaterial besteht und die nächste Lage innen aus Papiermaterial besteht, können diese beiden Papiermaterialien direkt aneinander verklebt insbesondere verleimt werden, sodass der Klebstoff beidseits in die Fasern des Papiermaterials eindringen kann und somit die Fasern einer Papierschicht durch den Klebstoff direkt mit den Fasern der anderen Papierschicht verbunden werden. Vorteilhaft daran ist der besonders feste Halt, welcher nicht in dieser Weise erreichbar ist, wenn zwischen den Papiermaterialien eine Barriereschicht aus Kunststoff vorhanden wäre. Durch die erfindungsgemäße Merkmalskombination wird somit erreicht, dass das Papiermaterial der Kraftpapierlagen direkt ohne Zwischenschichten wie beispielsweise Kunststofffolien aneinander verleimt werden, sodass der Klebstoff in die Fasermatrix des Papiermaterials eindringen kann, wodurch ein besonders guter Halt der Kraftpapierlagen aneinander und an der Kraftpapierschicht der Barrierelage erreicht wird. Es wird vermutet, dass zwischenliegende Kunststofflagen aufgrund ihrer Elastizität und/oder aufgrund ihres Fließverhaltens zu einer Schwächung des Schichtaufbaus führen.

Durch die gegenständliche Erfindung wird erreicht, dass die Dosenmäntel an Standard-Wickelanlagen herstellbar sind, wobei die robuste Barrierelage als Laminat aus Barrierefolie und Kraftpapier mit hoher Geschwindigkeit an einem Wickeldom verarbeitbar ist, da diese gegenüber reinen Folien oder herkömmlich verwendeten Laminaten deutlich reißfester ist.

Bevorzugt weist die Barrierelage eine Schichtdicke von 0,060 mm bis 0,145 mm auf. Bevorzugt weist die Kraftpapierschicht der Barrierelage eine Schichtdicke von 0,065 mm bis 0,090 mm auf. Bevorzugt weist die Kraftpapierschicht der Barrierelage eine Zugfestigkeit MD von zumindest 4,0 kN/m und eine Zugfestigkeit CD von zumindest 2 kN/m auf. Bevorzugt weist die diffusionsdichte Barrierefolie oder das diffusionsdichte Barrierelaminat eine Schichtdicke von 0,033 mm bis 0,055 mm auf.

Bevorzugt umfasst das Barrierelaminat eine Aluminiumschicht und zumindest zwei Kunststoffschichten, wobei die Aluminiumschicht zwischen zwei Kunststoffschichten vorliegt.

Bevorzugt ist die Dicke des Mantels über den Umfang der Dose konstant, oder weist zumindest eine Abweichung, umfassend zumindest eine Erhöhung auf, wobei die Dicke des Mantels an der Stelle der größten Erhöhung, maximal 160 % der Dicke des übrigen konstant dicken Mantels beträgt und die größte Erhöhung in absoluten Zahlen maximal 290 µm beträgt.

Bevorzugt sind zumindest zwei getrennt voneinander gewickelte weitere Kraftpapierlagen über der Barrierelage angebracht.

Bevorzug überlappen sich die zumindest zwei Kraftpapierlagen nicht selbst, oder weisen im Überlappungsbereich mit sich selbst je zumindest einen Randbereich mit reduzierter Dicke auf.

Durch dieses Merkmal wird erreicht, dass die zumindest zwei weiteren Kraftpapierlagen in deren jeweiligem Stoß- bzw. Überlappungsbereich mit sich selbst keine oder nur eine zulässige Erhöhung der Schichtdicke bewirken.

Bevorzugt ist die jeweilige Schichtdicke von zumindest zwei der weiteren Kraftpapierlagen jeweils aus dem Bereich von 140 µm bis 175 µm ausgewählt. Bevorzugt beträgt die jeweilige Zugfestigkeit der Kraftpapiere der Kraftpapierlagen zumindest 10 kN/m (MD) und zumindest 5 kN/m (CD).

Bevorzugt sind die weiteren Kraftpapierlagen und/oder weiteren Lagen aus Papier- oder Kartonmaterial jeweils längsgewickelt. Bevorzugt liegen deren Stoß- oder Überlappungsbereiche an unterschiedlichen Umfangsbereichen, bzw. sind die einander zugewandten Stoßkanten zweier Kraftpapierlagen bevorzugt zueinander versetzt.

Bevorzugt ist der Stoß- oder Überlappungsbereich der an die Barrierelage angrenzenden Kraftpapierlage gegenüber der Faltnaht der Barrierelage versetzt angeordnet.

Weniger bevorzugt aufgrund der aufwändigeren Herstellung kann die an die Barrierelage angrenzende Kraftpapierlage derart ausgebildet sein, dass diese beidseits an die Faltnaht der Barrierelage anstößt, sodass der verbreiterte Bereich der Faltnaht im Spalt zwischen den Stößen dieser Kraftpapierlage aufgenommen ist.

Bevorzugt weist die Dose eine außen um die Kraftpapierlagen aufgebrachte äußere Abdichtungslage auf, wobei diese beispielsweise als Folie, Laminat, oder beschichtetes Papier vorliegen kann. Bevorzugt werden beim erfindungsgemäßen Verfahren die Barrierelage, bevorzugt zumindest zwei weiteren Kraftpapierlagen und vorzugsweise auch die äußere Abdichtungslage an einer Wickelanlage kontinuierlich zu einem Hohlrohr gefertigt, von welchem einzelne Hohlzylinder abgeschnitten werden.

Alternativ kann die äußerste der zumindest zwei Kraftpapierlagen bereits vor dem Wickeln als Laminat aus einer Kraftpapierschicht und einer Barrierefolie vorliegen, wobei die Barrierefolie nach erfolgter Wickelung an der Außenseite des Verbunddosenmantels liegt.

Bei der äußeren Barrierefolie oder der äußeren Abdichtungslage an der Außenseite des Verbunddosenmantels kann es sich um eine semipermeable Folie handeln, welche Feuchtigkeit aus dem Dosenmantel austreten lässt, jedoch keine Feuchtigkeit von außen in den Dosenmantel gelangen lässt.

Beim Material der äußeren Barrierefolie oder der äußeren Abdichtungslage an der Außenseite des Verbunddosenmantels kann es sich um recyclebares oder erneuerbares PE, biologisch abbaubares PE, EVOH oder andere bekannte Barrierematerialien handeln.

In einer Ausführungsvariante wird eine äußere Abdichtungslage erst nach dem Abschneiden der einzelnen Hohlkörper angebracht. Dies kann dadurch erfolgen, dass ein schlauchförmige Hülle aus feuchtigkeitsdichtem Material außen über die einzelnen Hohlkörper gezogen wird und an diesen befestigt wird. Bevorzugt wird ein Schrumpfschlauch, gebildet aus einer Schrumpffolie, über den zylindrischen Hohlkörper gezogen und durch Wärmeeinwirkung und die damit verbundene Durchmesserverringerung am Dosenmantel angeformt. Bevorzug werden durch die schlauchförmige Hülle auch die beiden Schnittränder des Hohlkörpers bedeckt, sodass in diese keine Feuchtigkeit eindringen kann. Das Platzieren der Hülle bzw. des Schrumpfschlauchs erfolgt vorteilhaft bevor die beiden Endbereiche der einzelnen Hohlkörper nach außen ausgeformt werden. Ein Verkleben oder Anformen der Hülse oder des Schrumpfschlauchs an den Hohlkörper kann vor oder während des Ausformens der Endbereiche des Hohlkörpers erfolgen.

Die äußere Abdichtungslage kann nach dem Abschneiden der einzelnen Hohlkörper auch dadurch angebracht werden, dass diese beschichtet werden, oder mit einer Folie umwickelt werden, wobei auch in diesen Fällen bevorzugt die beiden Schnittränder der Hohlkörper von der Beschichtung oder der Folie mitabgedeckt werden.

Das Aufbringen der äußeren Abdichtungslage nach dem Abschneiden der einzelnen Hohlkörper ist insbesondere dann vorteilhaft, wenn aufgrund der verwendeten Materialien, insbesondere des Leims und dessen Auftragsmenge, der Schichtaufbau über die beiden Schnittränder des Hohlkörpers nicht ausreichend trocknen würde, wenn die Außenseite des Schichtaufbaus bereits in der Wickelanlage abgedichtet wird.

Alternativ zur äußeren Barriereschicht in Form einer Folie kann die äußerste der zumindest zwei Kraftpapierlagen bereits vor dem Wickeln einseitig an der späteren Außenseite mit Barrierematerial, beispielsweise Lack, beschichtet sein.

Weniger bevorzugt kann Barrierematerial, wie beispielsweise Lack, nach dem Fertigen auf die Außenseite des Hohlrohrs oder der vereinzelten Hohlzylinder aufgebracht werden.

Als Lack kann beispielsweise eine wässrige Polymerbeschichtung oder ein UV-Lack Anwendung finden.

Bevorzugt werden die Schnittränder der vereinzelten Hohlzylinder, an welchen das Papiermaterial der Kraftpapierlagen frei liegt, versiegelt, beispielsweise durch Aufbringen eines Tapes oder einer Folie, oder durch Beschichtung mit einem Barrierematerial, beispielsweise Lack, wasserfestem Leim, oder Flüssigkunststoff. Besonders bevorzugt erfolgt das Versiegeln der Schnittränder durch Imprägnieren, also indem eine Flüssigkeit aufgebracht wird, welche an den Schnitträndern etwas in die Fasermatrix der Kraftpapierlage eindringt bzw. gesogen wird und somit einen flüssigkeitsbeständigen Randbereich im Kraftpapier bildet. Eine solche Imprägnierung kann auch verwendet werden, wenn die äußerste Lage der Dose eine (bei Überlappung) oder zwei (bei Stoßnaht) freiliegende saugfähige Längskanten aufweist.

Bevorzugt wird zur Imprägnierung ein Polymergemisch in wässriger Lösung, oder als wässrige Emulsion verwendet.

Im erfindungsgemäßen Verfahren werden die Schnittränder der vereinzelten Hohlzylinder nach außen hin aufgebogen, um das Platzieren des Bodenelements und des Deckels zu erleichtern, bzw. um den Halt des Bodenelements und des Deckels am Hohlzylinder zu verbessern.

Die Dosenmäntel sind mit Standarddeckeln von Aluminiumdosen verschließbar und zudem ist das Befüllen und Verschließen der Dosen in Standardabfüllanlagen von Aluminiumdosen möglich, da der Dosenmantel die dafür notwendige maximale Schichtdicke nicht übersteigt und im Bereich der Faltnaht der Barrierelage eine noch zulässige Abweichung der Mantelstärke aufweist.

Bisher bestand in der einschlägigen Branche der gewichtige Vorbehalt, dass mit einer Dose aus einem abbaubaren, nichtmetallischen Material die geforderte Druckfestigkeit nicht zu erreichen sei, jedenfalls nicht dauerhaft und nicht sicher genug. Doch nach mehreren Jahren der Entwicklung gelang es nun, einen solchen Behälter mit hinreichender Druckfestigkeit herzustellen, der dazu noch marktkonform gestaltbar ist und nahtlos in die Anlagen zum nachgelagerten Befüllen der Dosen integrierbar ist.

Für einen Abfüller von Getränken ist die gegenständliche Dose mit keinem oder verhältnismäßig geringem Umrüstungsaufwand an bestehenden Anlagen verarbeitbar, sodass die Hemmschwelle zur Produktumstellung deutlich niedriger ist, als bei Verbundkörpern für unter Druck stehende Medien insbesondere kohlensäurehaltige Getränke, welche gänzlich neue Herstellungs-, Befüllungs- und Verschlussanlagen benötigen.

Durch die geringere Mantelstärke und die zumindest ähnliche Form ist die Dose optisch und haptisch einer Aludose ähnlicher, sodass der Konsument auf den ersten Blick wohl keinen Unterschied erkennt, bzw. weniger skeptisch bezüglich der neuartigen Verpackung ist.

Etwas überraschend hat sich gezeigt, dass der Hohlzylinder der Dose an Anlagen herstellbar ist, welche für die Wickelung von allgemeinen Verpackungskörpern aus Papier oder Kartonmaterial verwendet werden, wenn der Wickeldom entsprechend der herzustellenden Dose geformt bzw. dimensioniert wird, sodass auch hier die Gestehungskosten und der maschinelle Entwicklungsaufwand gering ausfallen können.

Vorteilhaft können zur Herstellung der Hohlzylinder bekannte Wickeldorn-Anlagen mit Verwendung eines runden Wickeldorns eingesetzt werden, wenn die Einzellagen des Dosenmantels zugeführt, um den Dorn gelegt und bevorzugt vollflächig aneinander verleimt werden, sodass zur Herstellung des Dosenmantels kontinuierlich arbeitende Standardanlagen mit geringem Anpassungsaufwand verwendet werden können. Ein runder Aufbau der Dose ist erforderlich, damit diese mit Standard-Dosendeckeln verschließbar ist, bzw. ist ein zylindrischer Körper druckfester als ein anders geformter, beispielsweise ein annähernd rechteckiger Körper mit abgerundeten Ecken, welcher für den allgemeinen Verpackungszweck durchaus üblich ist.

Vorteilhaft ist durch den Aufbau des Verbunddosenmantels eine druckfeste Dose an einer Anlage herstellbar, welche bislang für die Verpackung von herkömmlichen Konsumgütern verwendet wurde. Überraschend hat sich gezeigt, dass durch die Verwendung eine Barrierelage aus einer Kraftpapierschicht und einer Barrierefolie bzw. einem Barrierelaminat im bevorzugten Stärkenbereich die Arbeitsgeschwindigkeit der bekannten Anlage vorteilhaft erhöht werden kann, da eine Dehnung der Barrierefolie bzw. des Barrierelaminats am Dorn verhindert wird, welche bei gerader Wicklung deutlich stärker ausfällt, als bei spiralförmiger Wicklung.

Die Faltnaht kann hergestellt werden, indem die beiden Ränder der Barrierelage vom Wickeldom weg gefaltet und mit Folie an Folie aneinander verschweißt werden und danach die verschweißten Ränder auf eine Seite der Barrierelage umgelegt werden und an der Kraftpapierschicht der Barrierelage selbst verklebt werden. Alternativ könnte die Faltnaht gemäß einer nicht getesteten Variante auch dadurch gebildet werden, dass die Barrierelage zuerst an einem Rand auf sich selbst zurückgeschlagen wird und somit Kraftpapierschicht auf Kraftpapierschicht verleimt oder verklebt wird und danach am Wickeldom der nicht umgeschlagene Rand der Barrierelage mit der Barrierefolie nach unten auf die Barrierefolie des zurückgeschlagenen Randes aufgeschweißt oder aufgeklebt wird.

Im Ergebnis wird durch beide Varianten eine dichte Faltnaht mit identem Aufbau erreicht.

Das aus dem Stand der Technik bekannte zumindest geringfügige Versetzen der Stoßbereiche der einzelnen Lagen hat sich als geeignet herausgestellt, um keine strukturelle Schwäche zu erzeugen, welche bei direkt übereinanderliegenden Überlappungsbereichen vorliegen würde. Das bekannte Vorsehen von Abschrägungen oder Stufen an den Rändern der Lagen, kann vorteilhaft bei den bevorzugt zumindest zwei weiteren Kraftpapierlagen des Schichtaufbaus erfolgen, sodass sich die zumindest zwei Kraftpapierlagen zwar selbst überlappen, aber der Überlappungsbereich zu keiner Schichtdickenerhöhung führt.

Anstelle die zumindest zwei weiteren Kraftpapierlagen so wie die Barriereschicht in Längsrichtung des Dorns zu wickeln, könnten die zumindest zwei weiteren Kraftpapierlagen auch schräg um die gerade gewickelte Barriereschicht gewickelt werden, wobei auch dabei das Versetzen der Stoßbereiche und das Abschrägen oder Abstufen der Randbereiche des Kraftpapiers erfolgen kann. Das schräge Wickeln der zumindest zwei weiteren Kraftpapierlagen kann für jede Lage in derselben Richtung erfolgen, oder gegengleich zueinander. Diese Ausführungsvariante mit den schräg gewickelten weiteren Kraftpapierlagen hat aber den Nachteil, dass die Stoßbereiche bzw. Überlappungsbereiche der Kraftpapierlagen die Längsnaht der Barriereschicht kreuzen, wodurch an diesen Stellen Schwachstellen resultieren können. Bei der gegengleichen Wicklung kreuzen sich auch die Stoßbereiche bzw. Überlappungsbereiche der zumindest zwei Kraftpapierlagen, sodass auch dort Schwachstellen resultieren können.

Bevorzugt sind daher auch die zumindest zwei Kraftpapierlagen gerade gewickelt.

Als vorteilhaft hat sich erwiesen, wenn man in Erweiterung von bekannten Domwickelanlagen zusätzlich eine Kühlvorrichtung zum Kühlen des Dorns vorsieht. Bevorzugt ist der Dorn mit einer antiadhäsiv wirkenden Oberfläche versehenden. Durch die Kühlung und/oder die antiadhäsive Oberfläche kann auf die Verwendung von Gleitmitteln verzichtet werden, oder deren Einsatz zumindest eingeschränkt werden.

Eine besondere Bedeutung bei der gegenständlichen Erfindung kommt der Barrierelage zu, da diese einerseits nicht zu dick sein darf, da sonst die Faltnaht zu dick würde, was im Bereich des Deckels und des Bodenelements zu schleichenden Undichtheiten führen könnte, was ein späteres Bersten der unter Druck stehenden Dose bedeuten würde, da die Festigkeit der Kraftpapierlagen bei Kontakt mit Feuchtigkeit enorm verringert wird. Andererseits darf die Barrierelage nicht zu dünn sein, damit diese im Bereich der Faltnaht den wirkenden Zugkräften Stand hält, sodass dort keine schleichende Undichtheit auftritt. Die auf den inneren Spalt der Faltnaht wirkenden Druckkräfte werden durch die 180° Faltung der überlappenden Bereiche der Barrierelage in, in Umfangsrichtung der Dose wirkende, Zugkräfte umgeformt, welche von den direkt aneinander verleimten Bereichen der Kraftpapierschicht der Barrierelage aufgenommen werden.

An Hand von Zeichnungen werden nach dem erfindungsgemäßen Verfahren herstellbare Dosen, mögliche Aufbauvarianten deren Dosenmäntel und mögliche Anlagenkomponenten zur Ausführung des Verfahrens veranschaulicht:
- Fig. 1:: zeigt eine Einzelteildarstellung eines Fluidbehälters in Form einer Getränkedose.
- Fig. 2:: zeigt eine schematische Schnittdarstellung durch eine Getränkedose aus Fig. 1 aus zwei stark vergrößert dargestellten Lagen hergestellt.
- Fig. 3:: zeigt eine schematische Schnittdarstellung durch eine Getränkedose gemäß einer zweiten, dreilagigen Ausführungsform mit stark vergrößert dargestellten Lagen.
- Fig. 4:: zeigt eine schematische Schnittdarstellung durch eine Getränkedose mit einer ersten Lage mit auf ihrer Innenseite einer Barriereschicht, wobei die beiden Randbereiche der Lage die Wicklung überlappen, nach außen geführt sind, dann mit den Barriereschichten zusammengeschweißt sind und dann mittels Leim auf die gewickelte Lage umgelegt und verleimt werden.
- Fig. 5:: zeigt schematisch den Verfahrensschritt zur Herstellung der zylindrischen Dosenmäntel.
- Fig. 6:: zeigt schematisch den Verfahrensschritt des Aufbiegens der Ränder des Dosenmantels.
- Fig. 7:: zeigt schematisch das Platzieren eines Verschlusselements.
- Fig. 8:: veranschaulicht eine andere Boden- bzw. Deckelvariante mit vorgeformter Kontur in einem diametrischen Schnitt, mit einem Dichtring auf Silikonbasis;
- Fig. 9:: veranschaulicht die fertige Dose in einem Längsschnitt im Aufriss, mit den gebördelten dichten Rändern am Boden und Deckel.
- Fig. 10:: zeigt schematisch einen ersten Abschnitt einer Anlage zur Befüllung von Karton- bzw. Papierverbunddosenmänteln und/oder Aluminiumdosenmänteln.
- Fig. 11:: zeigt schematisch einen zweiten Abschnitt einer Anlage zur Befüllung von Karton- bzw. Papierverbunddosenmänteln und/oder Aluminiumdosenmänteln.
- Fig. 12:: zeigt schematisch einen dritten Abschnitt einer Anlage zur Befüllung von Karton- bzw. Papierverbunddosenmänteln und/oder Aluminiumdosenmänteln.
- Fig. 13:: zeigt einen Längsschnitt durch eine Ausführungsvariante eines zylindrischen Dosenmantels.
- Fig. 14:: zeigt den Schichtaufbau in Detailansicht des Längsschnitts durch die Ausführungsvariante des zylindrischen Dosenmantels.
- Fig. 15:: zeigt den Schichtaufbau des zylindrischen Dosenmantels in Detailansicht eines Querschnitts durch die Längsfaltnaht der Barrierelage.
- Fig. 16:: zeigt einen Längsschnitt durch eine Ausführungsvariante eines zylindrischen Dosenmantels mit Barrierelage und zwei Kraftpapierlagen.
- Fig. 17:: zeigt einen Längsschnitt durch eine Ausführungsvariante eines zylindrischen Dosenmantels mit Barrierelage und drei Kraftpapierlagen.
- Fig. 18:: zeigt einen Längsschnitt durch eine Ausführungsvariante eines zylindrischen Dosenmantels mit Barrierelage und vier Kraftpapierlagen.
- Fig. 19:: zeigt den Schichtaufbau eines zylindrischen Dosenmantels in Detailansicht eines Querschnitts durch die Längsfaltnaht der Barrierelage mit Abdichtstreifen an der Außennaht.
- Fig. 20:: zeigt schematisch mögliche Überlappungsbereiche der Kraftpapierlagen.
- Fig. 21:: zeigt den Schichtaufbau eines zylindrischen Dosenmantels in Detailansicht eines Querschnitts durch die Längsfaltnaht der Barrierelage mit Überlappungsnaht der äußeren Barriereschicht.
- Fig. 22:: zeigt den Schichtaufbau eines zylindrischen Dosenmantels in Detailansicht eines Querschnitts durch die Längsfaltnaht der Barrierelage mit Faltnaht der äußeren Barrierelage.
- Fig. 23:: zeigt den Schichtaufbau eines zylindrischen Dosenmantels in Detailansicht eines Querschnitts durch die Längsfaltnaht der Barrierelage mit Abdichtstreifen an der Außennaht.
- Fig. 24:: zeigt den Schichtaufbau eines zylindrischen Dosenmantels in Detailansicht eines Querschnitts durch die Längsfaltnaht der Barrierelage mit Überlappungsversiegelung der Stoßnaht der äußeren Barrierelage.
- Fig. 25:: zeigt eine Erweiterung einer Wickelanlage mit einer Vorrichtung zum Abdichten der äußeren Längsnaht.
- Fig. 26:: zeigt eine Erweiterung einer Wickelanlage mit einer Vorrichtung zum Einbringen von Klebstoff beim Falten der Faltnaht.
- Fig. 27:: zeigt den Schichtaufbau eines zylindrischen Dosenmantels mit Hotmelt-Versiegelung der Stoßnaht der äußeren Barrierelage.

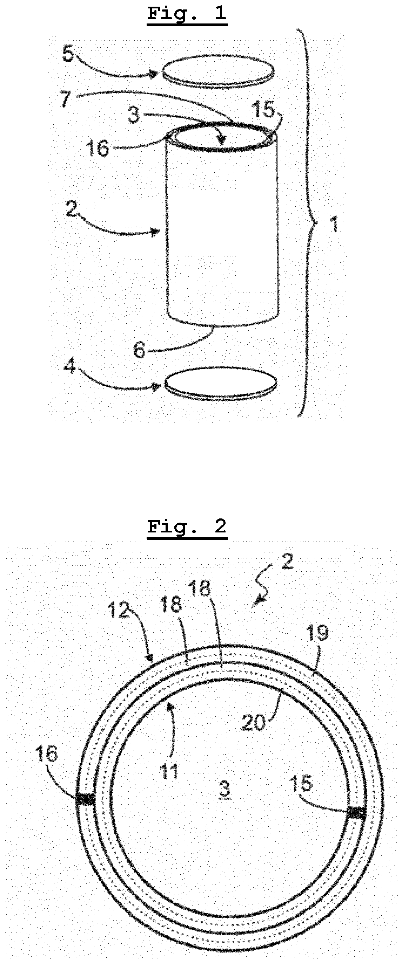

Im Folgenden werden die einzelnen Figuren näher beschrieben und erläutert. In Fig. 1 sind Komponenten einer Getränkedose 1 in einer stark schematischen Einzelteildarstellung gezeigt. Die Getränkedose 1 umfasst einen Rohrabschnitt bzw. einen hohlzylindrischen Dosenkörper 2 mit einem zur Aufnahme des Getränkes dienenden Doseninnenraum 3, sowie ein Bodenelement 4 und ein Deckelelement 5. Das Bodenelement 4 dient dazu, ein erstes Längsende 6 des Dosenkörpers 2 zu verschließen, wobei das Deckelelement 5 dazu vorgesehen ist, ein zweites Längsende 7 des Dosenkörpers 2 zu verschließen. Das Bodenelement 4 und das Deckelelement 5 sind vorzugsweise aus Metall hergestellt, vorzugsweise aus Aluminium. Diese Getränkedose 1 kann eine Höhe von 100 mm bis zu 250 mm bei einem Durchmesser von 3 5 mm bis 600 mm aufweisen, wobei eine Höhe von 100 mm bei einem Durchmesser von 45 mm bis 70 mm bevorzugt ist.

Die Fig. 2 zeigt eine erste Variante mit einem zweilagigen Dosenkörper in einem Querschnitt, mit stark vergrößert dargestellten Lagen, im Grundsatz. Eine erste Kraftpapierschicht 18 mit einer inliegenden Polyolefinschicht als Barriereverbund wurde als innere Lage 11 um einen zentralen zylinderförmigen Stahldom gewickelt und mit einer ersten Naht 15 wurden die in Wickelrichtung liegenden Ränder verleimt oder verschweißt. Eine zweite Kraftpapierschicht 18, wurde hernach als äußere Materiallage 12 auf die erste Lage 11 gewickelt, und zwar so, dass die in Wickelrichtung liegenden Ränder mit der Naht 16 an einer der Naht 15 gegenüberliegenden Seite des Dosenkörpers 2 verschweißt oder verleimt sind, sodass ein Dosenkörper 2 mit hohlem Doseninnern 3 entstand.

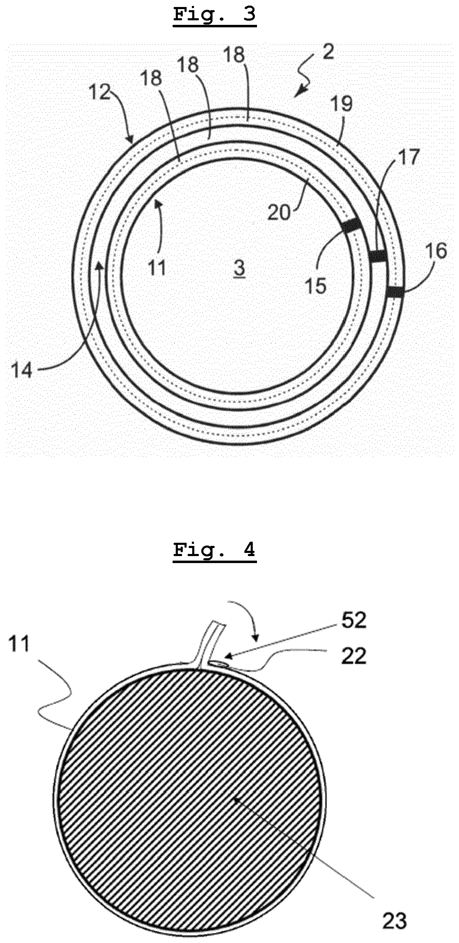

In Fig. 3 ist eine zweite Ausführungsform des Getränkebehältnisses 1 in einem Querschnitt durch den Dosenkörper 2 gezeigt, so dass ersichtlich ist, dass sich diese zweite Ausführungsform von der ersten Ausführungsform nach Fig. 2 durch den Aufbau des Dosenkörpers 2 unterscheidet, der bei dieser zweiten Ausführungsform aus drei Materiallagen 11, 14, 12 besteht, statt nur aus zwei Lagen.

Bei beiden Ausführungsformen, die in den Fig. 2 und 3 dargestellt sind, umfasst der Dosenkörper 2 eine gewickelte Innenmateriallage 11 und eine gewickelte Außenmateriallage 12. Bei der zweiten Ausführungsform gemäß der Fig. 3 ist eine weitere Materiallage vorhanden, nämlich eine gewickelte Zwischenmateriallage 14, die zwischen der Innenmateriallage 11 und der Außenmateriallage 12 angeordnet ist. Es können auch mehr als nur eine Zwischenmateriallage 14 zwischen der Innenmateriallage 11 und der Außenmateriallage 12 angeordnet sein, wobei es sich gezeigt hat, dass drei Zwischenmateriallagen 14 eine Art Maximum darstellen und eine weitere Erhöhung der Anzahl Zwischenlagen zur Erhöhung der Stabilität nicht notwendig ist.

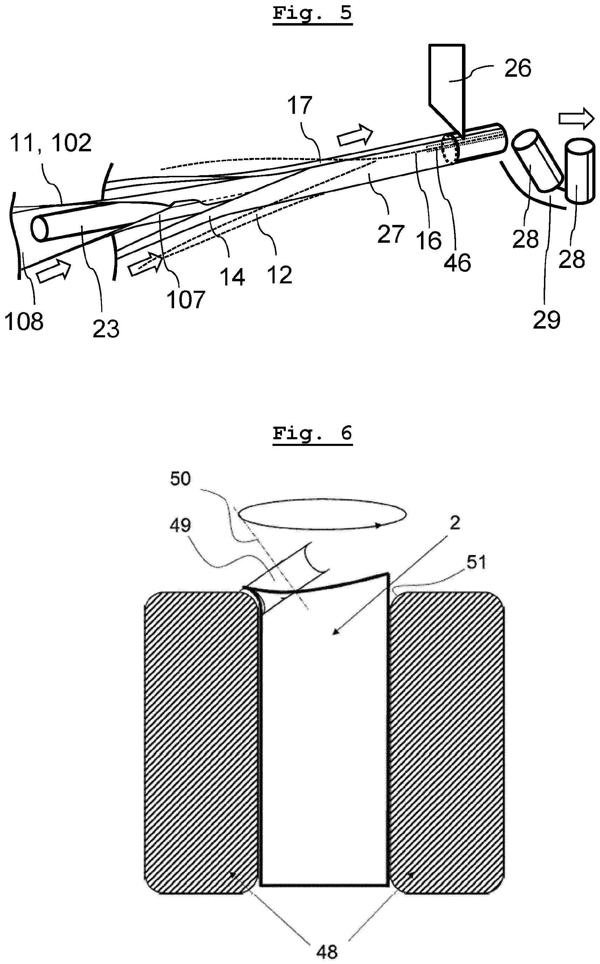

Beim erfindungsgemäßen Verfahren wird die als Barrierebahn wirkende innerste Lage 11, um einen Dorn 23 geformt, wie in den Fig. 4 und 5 dargestellt und mit einer in Längsrichtung verlaufenden Faltnaht versehen. Hierbei werden bevorzugt die den Wicklungsumfang überragenden Randbereiche der Lage nach außen umgelegt, sodass jeweils die inneren Barriereschichten, beispielsweise aus PE, aneinander anliegen. Dann werden diese Barriereschichten der beiden Randbereiche miteinander verschweißt, mittels einer Induktions- oder Ultraschall-Schweißung. Hernach werden die beiden zusammengeschweißten Randbereiche gemeinsam auf eine Seite auf die Lage abgeschwenkt. Der im Bild auf der rechten Seite ankommende Randbereich wird also um 180° umgelegt. Dabei trifft seine Kraftpapieroberfläche auf die Kraftpapieroberfläche der gewickelten Lage und der beim Abschwenken gebildete Kanal oder Kännel 52 bevorzugt wird mit Leim 22 ausgerüstet, sodass die beiden zusammengeschweißten Randbereiche mit der aufgewickelten Lage satt verleimt und somit versiegelt werden. Die Bahn weist für diese Verleimung daher kein Stoß-an-Stoß Maß auf, sondern es wird bewusst eine dreilagige Überlappung von etwa 8mm Breite erzeugt. Wenn der Kännel 52 mit Leim 22 verfüllt ist, wird ein Transport von Flüssigkeit im Zuge des späteren Füllprozesses wirksam vermieden.

Eine nächste Lage 14 von Kartonverbund-Material wird zeitgleich, jedoch örtlich ganz wenig versetzt wie in Fig. 5 gezeigt um den Dorn 23 und die bereits vorhandene Lage 11, die hier nach der Version gemäß Fig. 4 verbunden wurde, aufgewickelt und mit ihr durch Verleimung verbunden. Die Randbereiche der zweiten Lage 14 sind bevorzugt stufenförmig geschliffen, sodass sie sich durch Überlappung 45 formschlüssig miteinander verbinden lassen und diese Überlappung 45 wird verleimt, zur Bildung einer mittleren Naht 17. In Fig. 5 ist zudem gezeigt, dass eine dritte Lage 12 aus Kartonverbund- Material, das heißt die äußere Lage, ebenfalls zeitglich und örtlich ganz wenig versetzt um die dann mittlere Lage 14 gewickelt werden kann und ihre formschlüssige Überlappung ebenfalls verleimt werden kann, zur Bildung der äußeren Naht 16. Die äußerste Schicht kann mit einem Außenmaterial beschichtet sein, zum Beispiel mit einer Schicht mit ganz feinen Löchern, sodass Wasserdampf aus dem Dosenkörper austreten kann, während aber umgekehrt kein Eindringen von Wasserdampf in die Dose ermöglicht ist. Bei dieser Beschichtung handelt es sich bevorzugt um Polyethylen PE, Polypropylen PP oder Polyethylenterephthalat PET. Die äußerste Naht 16 kann mit einem Dichtstreifen (punktiert dargestellt) aus PE, PP, PET mit/ohne Haftvermittler oder Klebstoff versiegelt werden und dieser Dichtstreifen wird je nach seiner Ausprägung mit oder ohne Wärmezufuhr appliziert. Anstelle des Aufklebens eines Streifens 46 auf das sich auf dem Dorn 23 bewegende entstandene Endlosrohr 27 kann die Naht 16 der äußersten Lage mittels heißem und somit flüssigem PE versiegelt werden.

Für die industrielle Herstellung der Dosen aus Kartonverbund-Material wird dieses in Form von vorgefertigten Bahnen aus Kraftpapier mit seiner jeweiligen Beschichtung in Rollen angeliefert, von diesen abgerollt und der in Fig. 5 veranschaulichten Wickelvorrichtung zugeführt. Beim Beispiel der Fig. 5 wären beispielsweise drei Rollen als Bahnen für die drei zu wickelnden Lagen 11, 14 und 12 vorhanden. Nach dem Abrollen werden von einer Maschine bevorzugt die Randbereiche der Bahnen 14, 12 geschliffen, zum Erzeugen einer Schrägfläche 44 oder einer Stufe 21. Es sind denn auch hauptsächlich diese Rollen, nebst dem Leim und den Boden- und Deckelelementen, die für die Herstellung der Fluidbehälter an den Dosenabfüller geliefert werden können, aber kein Leergut und somit kein Volumengut mehr.

Die Bahnen 11, 14, 12 werden bevor sie der Wickelvorrichtung zugeführt werden auf einer deren flächigen Seiten mit einem Klebstoff, vorzugsweise Leim beschichtet.

Danach werden, wie in Fig. 5 gezeigt, die "endlose" Materialbahnen der einzelnen Lagen 11, 14, 12, das heißt zunächst jene zur Bildung der innersten Lage 11, durch Zuführen und Entlangziehen längs eines stationären, zylinderförmigen Stahldorns 23 in einer Maschinenstation durch dieselbe um den Stahldom 23 gewickelt. Die Materialbahnen läuft dabei zwischen dem Stahldorn 23 und mehreren anschmiegenden Rollen (nicht dargestellt) mit je U-förmigem Querschnitt hindurch. Bei der innersten Lage 11 erfolgt die Verschweißung der nach außen ragenden Ränder an deren Barriereschicht, wie in Fig. 4 gezeigt. Dann folgt das Weiterbefördern der zu einem Rohr gewickelten innersten Lage 11 über einen weiteren Abschnitt des Stahldorns 23. Anpressrollen (nicht dargestellt) halten die innerste Lage 11 satt auf dem Dorn 23 und oben wird die mittels Induktion oder Ultraschall eben erzeugte Schweißnaht umgelegt und angepresst, sodass sie mit der Außenseite des Kartonverbund- Materials der innersten Lage 11 verklebt wird. Die dann fertige innerste Lage 11 wird auf dem Dorn 23 weiterbefördert.

Als Nächstes wird auf derselben Maschine örtlich kurz hinter der innersten Lage 11 die mittlere Lage 14 auf die innerste Umwicklung bzw. Lage 11 aufgebracht. Die bevorzugt in eine Stufe 21 oder Schrägfläche 44 geschnittenen Längsränder dieser mittleren Lage 14 werden durch die Umwicklung des Dorns 23 zur Überlappung gebracht und mittels des bereits zuvor aufgebrachten Leims verleimt. Und schließlich wird die äußere Lage ebenfalls zeitgleich und örtlich wenig zurückversetzt auf die zuvor aufgewickelte Lage 14 aufgebracht.

Das jetzt aus drei miteinander verleimten Lagen hergestellte und in Fig. 5 gezeigte Rohr 27 aus Kartonverbund-Material wird dann einer Schneidvorrichtung 26, beispielsweise einer getaktet hin und her fahrbaren Guillotine, zugeführt, wie in Fig. 5 gezeigt, welche an gewünschten Stellen das Rohr 27 in Rohrabschnitte 28 schneidet. Das Schneiden kann aber nicht nur mit einer bevorzugt fahrbaren Guillotine erfolgen, sondern auch mit einer bekannten Multi- Rundmessermaschine. Hierbei fährt ein Schlitten mit mehreren Rundmessern in der Produktionsgeschwindigkeit mit dem Endlosrohr 27 mit und kann so in einem Vorgang mehrere Rohrabschnitte 28 schneiden. Nach dem Schneiden fahren die Dosen-Abschnitte 28 bevorzugt durch einen Wärmetunnel, um die Leimfeuchtigkeit abzuführen. Die Wärme kann durch verschiedene Arten erzeugt werden. Bevorzugt wird Warmluft.

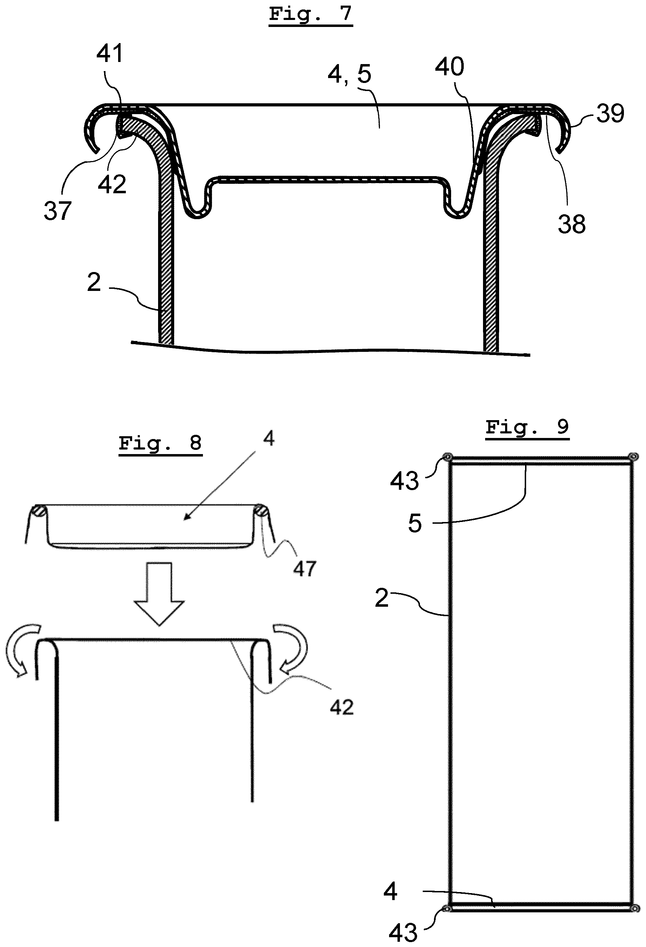

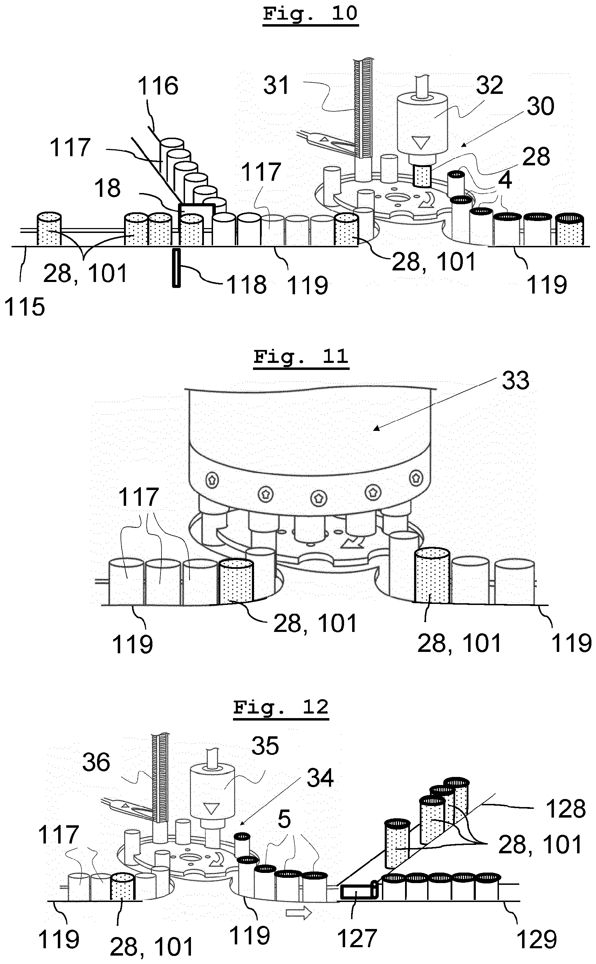

Nach dem Zuschneiden der Rohrabschnitte 28 in der gewünschten Länge, je nach gewünschtem Dosenvolumen, werden durch eine Maschine an den beiden Rändern der offenen Enden der Rohrabschnitten 28 diese Ränder in Auskragungen ausgeformt. Hierzu werden von beiden Seiten rotierende Spreizwerkzeuge in die offenen Enden eingefahren. Die Fig. 6 zeigt eine Möglichkeit für dieses Aufspreizen auf. Der Dosenkörper 2 wird in einen Hohlzylinder 48 gesteckt, welcher abgerundete Innenränder 51 aufweist. Mit einer Stahlrolle 49, die um die Achse 50 dreht, wird diesem gekrümmten Innenrand 51 nachgefahren, wobei die Achse 50 so bewegt wird, dass sie eine Kegelwand beschreibt. Die Stahlrolle 49 rollt den oberen Randbereich des Dosenkörpers 2 in einem oder mehreren Umgängen auf den gekrümmten Rand 51 und spreizt die Lagen leicht auf. Es entsteht eine Auskragung, wie in der folgenden Fig. 7 gezeigt. Die Schnittränder werden bevorzugt nach dieser Krempelung bzw. dem erfolgten Aufspreizen durch Anstreichen mit einem Dispersionskleber, zum Beispiel einem flüssigem Polyethylen PE oder einem Dispersionskleber oder einem anderen geeigneten, schnell abbindenden und lebensmittelkonformen Kleber versiegelt, damit keine Feuchtigkeit ins Innere der Kraftpapierschicht eindringen kann, denn das spätere Befüllen erfolgt unvermeidbar in einer feuchten Atmosphäre. Die Schnittkanten werden hernach wiederum mit Wärme behandelt, um die Abbindezeit zu minimieren. Hierfür wird an dieser Stelle eine Infrarot-Bestrahlung bevorzugt. Danach werden diese Rohrabschnitte 28 in aufrechter Lage in einer Reihe in einer Transportvorrichtung eingeordnet und durchfahren dann wie in Fig. 10 gezeigt ein Karussell 30, an welchem ein Automat 32 aus einem Zufuhrmagazin 31 ein vereinzeltes Verschlusselement, z.b. ein Bodenelement 4, in die oben offene Seite jedes Rohrabschnitts 28 einsetzt und den äußeren Randbereich des radial auslaufenden Bodenrandes in radialer Richtung um den Randbereich des offenen Rohrabschnittes 28 dichtend umbördelt.

In der Fig. 7 ist dieser Vorgang des dichten Einbördelns eines Verschlusselements in Form eines Boden- 4 oder auch Deckelelementes 5 veranschaulicht. Bei den Boden- und Deckelelementen kann es sich um einen Standard-Boden bzw. Standard-Deckel handeln, mit denen herkömmliche Aludosen verschlossen werden, und die dann mit denselben Maschinen montierbar sind. Das Boden- 4 oder Deckelelement 5 besteht aus Aluminium und weist einen radial abstehenden Randbereich 41 auf, einen Bereich also, der über den Durchmesser des Dosenkörpers 2 hinausragt. Das Boden- 4 oder Deckelelement 5 mit dem Randbereich 41 wird von einem Automaten mit dem Randbereich 42 des Dosenkörpers 2 zur Überlappung gebracht. Hernach erfolgt die Einbördelung durch den Automaten 32, welcher hierzu die auskragenden doppellagigen Abschnitte 41, 42, also den Randbereich 41 gemeinsam mit dem Randbereich 42 des Dosenkörpers einbördelt, also um etwa 360° oder mehr einrollt, wodurch eine dichte Bördelnaht entsteht. Wie in Fig. 7 dargestellt ist, weist der Schnittrand des Dosenkörpers 2 bevorzugt eine Versiegelung 37 auf, welche aus feuchtigkeitsdichtem Material besteht. Das Deckelelement 5 oder Bodenelement 4 weist üblicherweise ein Compound-Material 38 auf, welches eine elastisches Dichtmaterial ist, das im Bereich des abstehenden Randbereichs 41, welcher dem Randbereich 42 des Dosenkörpers 2 zugewandt liegt, aufgebracht ist.

Bevorzugt erstreckt sich das Compound-Material 38 von der Innenseite des Curls 39 (äußerste nach unten verlaufende Krümmung des Randes) des Deckelelements 5 oder Bodenelements 4 bis zur Schulter 40 des Deckelements 40, wobei sich das Compound-Material 38 zumindest teilweise über die Höhe der Schulter 40 erstreckt und zumindest teilweise über den Innenradius des Curls 39. Bevorzugt erstreckt sich das Compound-Material 38 zumindest über die halbe Höhe der Schulter 40.

Die Fig. 8 zeigt einen alternativen Boden bzw. Deckel 4, der hier in einem diametrischen Schnitt dargestellt ist. Wie man erkennt, ist in den von ihm gebildeten nach unten offenen Kännel ein Dichtring 47 auf Silikonbasis eingelegt. Der Deckel wird hernach wie bei einer herkömmlichen Alu-Dose eingebaut, mit denselben Maschinen. Der Silikondichtring sorgt für eine zusätzliche einwandfreie Dichtigkeit, und die einander überlappenden Bereiche werden gemeinsam nach innen eingerollt.

Die Fig. 10 zeigt einen Rundtaktautomaten 32 mit einem Karussell 30, welcher die Bodenelemente auf die Dosenkörper montiert und deren Ränder mit dem Dosenkörperrand einkrempelt bzw. einbördelt, wie oben beschrieben. Es folgt nun das Stürzen der einseitig offenen Rohrabschnitte 28 im Förderkanal, sodass deren nun offene Seite oben liegt, wie in Fig. 11 gezeigt. Dann durchfahren sie eine Karussell- Füllstation 33, welche jeden Rohrabschnitt 28 mit definierter Füllmenge befüllt. Schließlich durchfahren die gefüllten, unten verschlossenen Rohrabschnitte 28 wie in Fig. 12 gezeigt ein Karussell 34, an welchem ein Automat 35 aus einem Zufuhrmagazin 36 ein vereinzeltes Deckelelement 5 mit Pullring-Verschluss in die oben offene Seite jedes gefüllten Rohrabschnitts 28 einsetzt und dazu den wiederum radial abstehenden Rand des Deckelelementes 5 in radialer Richtung um den Randbereich des offenen Rohrabschnitts 28 dichtend umbördelt.

Eine gefüllte und geschlossene Dose 1 präsentiert sich hernach wie in Fig. 9 dargestellt, wo sie in einem Schnitt längs ihrer Längsachse gezeigt ist. Man erkennt den Dosenkörper 2 und die Bördelungen 43 oben und unten, mit denen der Deckel 5 und der Boden 4 dichtend eingesetzt wurden.

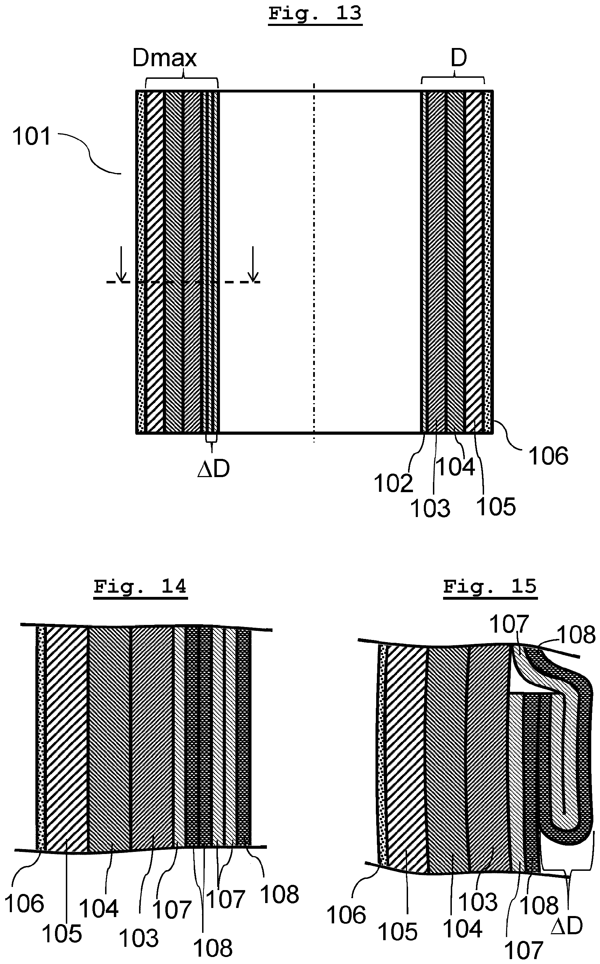

In Fig. 13 ist ein besonders bevorzugter Dosenmantel 101, welcher nach dem ersten Schritt des erfindungsgemäßen Verfahrens vorliegen kann, im Längsschnitt durch die zylindrische Dose dargestellt. Der Dosenmantel 101 weist von innen nach außen eine Barrierelage 102, eine innere Kraftpapierlage 103, eine mittlere Kraftpapierlage 104, eine äußere Papier- oder Kraftpapierlage 105 und eine äußere Barriereschicht 106 auf.

Die Barrierelage 102 weist an einer Stelle des Umfangs eine in Längsrichtung des Dosenmantels 101 verlaufende Faltnaht auf, wobei bei der Faltnaht drei Lagen der Barrierelage 102 übereinander zu liegen kommen.

Im Bereich der Faltnaht weist der Dosenmantel 101 die maximale Dicke Dmax auf, welche gegenüber der übrigen Dicke D des Dosenmantels 101 größer ist, nämlich um das doppelte der Dicke der Barrierelage 102. Die Dickendifferenz ΔD beträgt also das Doppelte der Dicke der Barrierelage 102.

Während die Dickendifferenz bei herkömmlichen Verpackungen kaum eine Rolle spielt, ist diese bei druckfesten Dosen maßgeblich entscheidend, ob die Dose im Bereich der Deckel dicht bleibt, oder mit der Zeit Feuchtigkeit im Bereich der Dickendifferenz also im Bereich der Faltnaht zwischen Deckel und Barrierelage 102 in die Kraftpapierlage 103 eindringen kann. Es wurde nach dem Stand der Technik bisher versucht die Barrierelage 102 möglichst dünn auszuführen, oder deren Faltnaht durch eine Zwischenlage zu kaschieren. Das Kaschieren der Faltnaht ist verfahrenstechnisch aufwendig und kann zu einer Schwachstelle führen, da zwischen den beiden Ränder der Zwischenlage ein großer Spalt vorliegt, in welchem die Faltnaht aufgenommen ist. Die Barrierelage 102 kann nach dem Stand der Technik auch als möglichst dünne Folie, meist Kunststoff- Aluminium- oder eine Verbundfolie ausgeführt sein, mit den Nachteilen, dass diese weniger einfach bzw. langsamer zu verarbeiten sind und dass diese selbst eine geringe Festigkeit aufweisen, bzw. schleichenden Verformungen unterliegen können.

Es ist vorgesehen, die Barrierelage 102 als Verbund aus Kraftpapierschicht 107 und einer Barrierefolie oder als Verbund aus Kraftpapierschicht 107 und Barrierelaminat 108 aus mehreren Folienschichten auszuführen. Dies führt zwar zwangsläufig zu einer an sich nachteiligen Erhöhung der Dickendifferenz im Bereich der Faltnaht, führt aber vorteilhaft dazu, dass die Barrierelage 102 besser wickelbar ist und dass die Faltnaht stabiler ist.

Bevorzugt beträgt die Länge der Überlappung der Faltnaht in Umfangsrichtung des Dosenmantels 101 zwischen 1 und 6 mm besonders bevorzugt zwischen 2 und 4 mm insbesondere 3mm.

In Fig. 14 und 15 ist der besonders bevorzugter im ersten Verfahrensschritt hergestellter Dosenmantel 101 im Detail dargestellt, wobei hier die Barrierelage 102 als Verbund aus einer Kraftpapierschicht 107 und Barrierelaminat 108 dargestellt ist. Insbesondere vorteilhaft an der Barriereschicht 102 ist, dass bei Herstellung der Faltnaht kein artfremdes Material miteinander zu verkleben ist, da artfremdes Verkleben, beispielsweise von Papiermaterial und Kunststoff, in der Regel speziellere Klebstoffe und/oder mehr Zeit erfordert und zu schwächeren Verbindungen führt als das Verkleben von Papier auf Papier oder Kunststoff auf Kunststoff.

Wie in Fig. 14 und 15 ersichtlich ist, ist die innerste Schicht des Dosenmantels 101 durch das Barrierelaminat 108 gebildet, welche auf die Kraftpapierschicht 107 laminiert ist. Das Verbinden des Barrierelaminats 108 und der Kraftpapierschicht 107 erfolgt bereits vor dem Wickeln des zylindrischen Dosenmantels 101. Bevorzugt wird das Material der Barrierelage 102 in Form des Verbundes der Kraftpapierschicht 107 und des Barrierelaminats 108 hergestellt, nachfolgend zu einer Rolle aufgewickelt und dann als Rolle für den Wickelvorgang des zylindrischen Dosenmantels 101 bereitgestellt.

Im Bereich der Faltnaht weist die Barrierelage 102 eine dreifache Überlappung mit sich selbst auf. Im Bereich der Faltnaht ist somit von innen nach außen gesehen ganz innen das Barrierelaminat 108, gefolgt von einer Kraftpapierschicht 107, wobei diese bereits vor dem Wickeln fest miteinander verbunden sind. An die Kraftpapierschicht 107 schließt eine weitere Kraftpapierschicht 107 an, wobei diese bevorzugt unmittelbar vor bzw. während dem Wickeln miteinander verklebt, insbesondere verleimt werden. Auf die weitere Kraftpapierschicht 107 folgt Barrierelaminat 108, wobei diese bereits vor dem Wickeln fest miteinander verbunden sind. An das Barrierelaminat 108 schließt eine weitere Schicht Barrierelaminat 108 an, wobei die beiden Schichten Barrierelaminat 108 beim Wickelvorgang miteinander verbunden, bevorzugt verschweißt werden. An die weitere Schicht Barrierelaminat 108 schließt wieder eine Kraftpapierschicht 107 an, welche die äußerste Lage der Faltnaht bildet. Die äußere Schicht der Barrierelage 102 ist somit über den gesamten Umfang durch die Kraftpapierschicht 107 gebildet. Die Kraftpapierschicht 107 ist an der Außenseite unbehandelt, also nicht lackiert oder laminiert, sodass die Außenseite durch Kraftpapiermaterial gebildet ist.

Um die Außenseite der Barrierelage 102 wird beim Wickelvorgang die innere Kraftpapierlage 103 gelegt, wobei diese auf der Innenseite und auf der Außenseite unbehandelt also nicht beschichtet oder laminiert ist. Die Innenseite der inneren Kraftpapierlage 103 wird vollflächig mit der Außenseite der Barrierelage 102 verleimt, sodass hier vorteilhat Kraftpapiermaterial direkt mit Kraftpapiermaterial verleimt wird, sodass Leim in die Fasermatrix beider Lagen eindringen kann, wodurch eine besonders hohe Endfestigkeit der Klebeverbindung erreicht wird.

Weniger bevorzugt können auch andere Klebstoffe wie Hotmelt-Klebstoffe oder Zweikomponentenklebstoffe verwendet werden, wobei die geringere Endfestigkeit der Hotmelts und die schwierige Verarbeitbarkeit der Zweikomponentenklebstoffe als wesentliche Nachteile gegenüber Leim bzw. wasserbasierten Klebstoffen genannt werden können. Als Leime werden hierin wässrige Lösungen von Klebstoffen verstanden. Insbesondere können bekannte Papierleime Verwendung finden.

Weniger bevorzugt kann auch eine Kombination aus zwei oder mehreren unterschiedlichen Klebstoffen verwendet werden, wobei diese gemeinsam zur Verklebung zweier Lagen verwendet werden könnte, oder jeweils zur Verklebung unterschiedlicher Lagen. Beispielsweise können Hotmelt und wasserbasierter Klebstoff nebeneinander auf eine Lage aufgetragen werden zur Verklebung zweier Lagen aneinander.

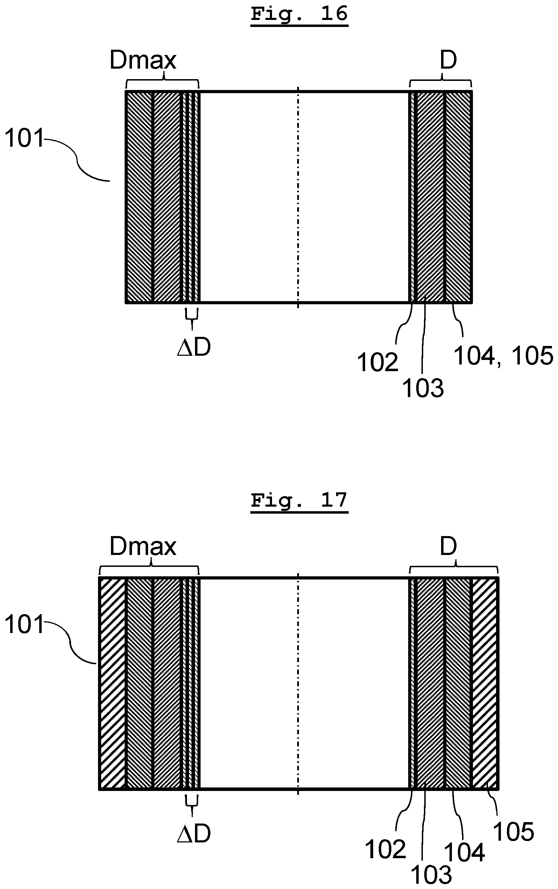

Um die Außenseite der inneren Kraftpapierlage 103 kann, wie in Fig. 16 dargestellt ist, beim Wickelvorgang zumindest eine weitere Kraftpapierlage 104 gelegt werden, wobei diese auf der Innenseite unbehandelt also nicht beschichtet oder laminiert ist.

Das Verwenden von zumindest zwei Kraftpapierlagen 103, 104 ist zwar aufwändiger und mit höheren Materialkosten verbunden als das Verwenden von nur einer dafür dickeren Kraftpapierlage für den Dosenmantel, jedoch ist daran vorteilhaft, dass die beiden dünneren Kraftpapierlagen schneller an der Wickelmaschine verarbeitete werden können und dass die Stabilität des Dosenkörpers gegenüber der Verwendung einer dickeren Lage überraschenderweise sogar erhöht werden konnte.

Bevorzugt werden zwei Kraftpapierlage 103, 104 und eine zusätzliche Papier- oder Kraftpapierlage105 verwendet, wie in den Fig. 13-15 dargestellt, wobei die innere Kraftpapierlage 103 und jede mittlere Kraftpapierlage 104 beidseitig unbehandelt bzw. unbeschichtet sind und die äußere Papier- oder Kraftpapierlage 105 vorzugsweise zumindest an der Innenseite unbehandelt bzw. unbeschichtet ist.

Ein besonders bevorzugter Dosenmantel wird mit einer Höhe im Bereich von 130 mm bis 150 mm und einem Außendurchmesser im Bereich von 50mm bis 60mm und einem Innendurchmesser Bereich von 48,6 mm bis 58,6 mm gefertigt.

Eine besonders bevorzugte verschlossene Dose liegt mit den Dimensionen: Außenhöhe 134 mm, Innenhöhe 133 mm, Außendurchmesser 52,4 mm, Innendurchmesser 51,2 mm, Innenvolumen ca. 270-275 ml, Füllvolumen 250 ml, vor.

Wie beschrieben, weist die Dose als innerste Lage eine Barrierelage 102 auf, welche aus Folienmaterial und Kraftpapier gebildet ist. Das Folienmaterial ist bevorzugt eine Verbundfolie umfassend eine Aluminiumfolie und zumindest eine Kunststofffolie, welche zusammen das Barrierelaminat 108 bilden. Bevorzugt weist das Barrierelaminat 108 eine Aluminiumfolie, besonders bevorzugt mit einer Schichtdicke von 6 - 9 µm, auf, welche zwischen zwei Kunststoffschichten vorliegt, sodass die Barrierelage 102 von innen nach außen den Aufbau Kunststoffschicht, Aluminiumschicht, Kunststoffschicht, Kraftpapier aufweist.

Das Barrierelaminat 108 weist bevorzugt von innen nach außen den Aufbau Kunststofffolie, bevorzugt aus PE, Aluminiumfolie, Haftvermittler bevorzugt in Form von Surlyn, Kunststofffolie bevorzugt aus PE auf. Die einzelnen Schichten des Barrierelaminats 108 liegen besonders bevorzugt in folgenden Dicken vor: Kunststofffolie 10-25 µm, Haftvermittler 2-5 µm, Aluminiumfolie 6,5-7,5 µm, Kunststofffolie 10-25 µm.

Bevorzugt weist das Barrierelaminat 108 eine Dicke von 30 µm bis 55µm auf. Das Barrierelaminat 108 hat eine besonders bevorzugte Dicke von 35-50 µm, insbesondere 40-45µm. Bevorzugt weist das Barrierelaminat 108 eine Grammatur von 45 bis 75 g/m² auf, insbesondere 50 g/m² bis 65 g/m².

Die Kraftpapierschicht 107 der Barrierelage 102 weist bevorzugt eine Dicke von 60 µm bis 90 µm auf. Die Kraftpapierschicht 107 der Barrierelage 102 weist besonders bevorzugt eine Dicke von 70 - 85 µm auf. Die Kraftpapierschicht 107 der Barrierelage 102 weist bevorzugt eine Grammatur von 40 g/m² bis 80 g/m² auf, insbesondere 50-70 g/m², insbesondere 60 g/m².

Die Barrierelage 102 weist eine bevorzugte Schichtdicke von 90 µm bis 145 µm auf. Die Barrierelage 102 weist eine besonders bevorzugte Schichtdicke von 110 - 135 µm auf.

Die Reißfestigkeit MD des Kraftpapiers der Kraftpapierschicht 107 beträgt bevorzugt zumindest 4 kN/m, insbesondere zumindest 5.0 kN/m. Die Reißfestigkeit CD des Kraftpapiers der Kraftpapierschicht 107 beträgt bevorzugt zumindest 2 kN/m, bevorzugt zumindest 2,5 kN.

Bei einer zweiten Ausführungsvariante der Barrierelage 102 weist diese von innen nach außen den Aufbau Barrierelaminat 108 mit den Schichten: Kunststoffschicht in Form eines Heißsiegellacks, bevorzugt aus PET; Aluminiumschicht in Form einer Aluminiumfolie; Kunststoffschicht in Form von Klebstoff und Kraftpapierschicht 107 aus Kraftpapier auf. Bevorzugt weist dabei das Kraftpapier der Kraftpapierschicht 107 eine Grammatur von 40 g/m² auf. Bevorzugt weist der Heißsiegellack eine Grammatur von 1,6 g/m² auf, die Aluminiumfolie eine Schichtdicke von 7,7 µm und eine Grammatur von 20,8 g/m² und die Kunststoffschicht aus Klebstoff eine Grammatur von 2 g/m². Gesamt weist diese Barrierelage 102 eine Schichtdicke von ca. 60 µm und eine Grammatur von ca.65 g/m² auf.

Die Barrierelage 102 wird unter Bildung einer Faltnaht in Längsrichtung um einen Dorn gewickelt, sodass diese einen rohrförmigen Körper bildet, wobei die innere Kunststofffolie des Barrierelaminats 108 dem Dorn zugewandt und die Kraftpapierschicht 107 dem Dorn abgewandt liegt.

Die nächste Lage, also die innere Kraftpapierlage 103 weist besonders bevorzugt eine Grammatur von 125 g/m², eine Reißfestigkeit MD von > 12 kN/m und eine Dicke von 0,160 µm auf. Das Kraftpapier ist beidseitig unbehandelt. Bevorzugt weist die innere Kraftpapierlage 103 eine Grammatur von 95 g/m² bis 135 g/m² und/oder eine Reißfestigkeit von größer 10 kN/m und/oder eine Dicke von 0,140 mm bis 0,175 mm auf.

Die Kraftpapierlage wird direkt und vollflächig mit der Kraftpapierschicht 107 der Barrierelage 102 verklebt, insbesondere verleimt, indem diese um den rohrförmigen Körper der Barrierelage 102 gewickelt wird.

Zum Verleimen wird Leim, bevorzugt Polyvinylacetat, bevorzugt in einer Menge von 10 - 25 g/m², insbesondere 15 - 20 g/m², vollflächig auf die Außenseite der Barrierelage 102 oder die Innenseite der inneren Kraftpapierlage 103 aufgetragen.

Die nächste Lage ist die mittlere Kraftpapierlage 104 beispielhaft mit einer Grammatur von 125 g/m², einer Reißfestigkeit von > 12 kN/m und einer Dicke von 0,160 mm. Das Kraftpapier ist beidseitig unbehandelt. Bevorzugt weist die mittlere Kraftpapierlage 104 eine Grammatur von 95 g/m² bis 125 g/m² und/oder eine Reißfestigkeit MD von größer 10 kN/m und/oder eine Dicke von 0,140 mm bis 0,175 mm auf.

Diese mittlere Kraftpapierlage 104 wird direkt und vollflächig mit der darunterliegenden inneren Kraftpapierlage 103 verklebt, insbesondere verleimt, indem diese um den rohrförmigen Körper der Barrierelage 102 und inneren Kraftpapierlage 103 gewickelt wird.

Zum Verleimen wird Leim, bevorzugt Polyvinylacetat, bevorzugt in einer Menge von 10 - 25 g/m², insbesondere 15 - 20 g/m², auf die Außenseite der inneren Kraftpapierlage 103 oder die Innenseite der mittleren Kraftpapierlage 104 aufgetragen.

Der in Fig. 16 dargestellte durch diese drei Schichten gebildete Dosenmantel 101 weist bevorzugt eine Dicke D von 378 bis 495 µm, insbesondere 430-460 µm auf. Die Dickendifferenz ΔD beträgt bevorzugt zwischen 196 µm bis 290 µm, bevorzugt 220-270 µm. Im Bereich der Faltnaht weist der Dosenkörper eine Dicke Dmax von bevorzugt 650-730 µm auf, wobei Dmax ca. 150% der Dicke D des angrenzenden Dosenmantels 101 beträgt.

Bevorzugt weist der Dosenkörper eine vierte Lage auf, welche gebildet ist aus der äußeren Papier- oder Kraftpapierlage 105. Die äußere Papier- oder Kraftpapierlage 105 weist bevorzugt eine Grammatur von 80-130g/m² auf, insbesondere 100-120 g/m². Die äußere Papier- oder Kraftpapierlage 105 weist bevorzugt eine Dicke von 70-120 µm auf, insbesondere 90-110 µm.

Die äußere Papier- oder Kraftpapierlage 105 wird in der Wickelanlage über der mittleren Kraftpapierlage 104 aufgebracht und bevorzugt mit Leim, bevorzugt Polyvinylacetat, in einer Menge von bevorzugt 10 - 25 g/m², insbesondere 15 - 20 g/m², mit dieser vollflächig verklebt.

Der Dosenmantel 101, bestehend aus der Barrierelage 102, der inneren Kraftpapierschicht 103, der mittleren Kraftpapierschicht 104 und der äußeren Papier- oder Kraftpapierschicht 105 (ohne Barriereschicht 106), ist in Fig. 17 veranschaulicht. Die Dicke D des Dosenmantels beträgt ca. 550 µm, wobei im Bereich der Faltnaht die maximale Dicke Dmax 800 µm beträgt, was ca. 145% der Dicke D des angrenzenden Dosenmantels 101 entspricht. Die Dickendifferenz ΔD beträgt ca. 250 µm. Der Dosenmantel 101, bestehend aus der Barrierelage 102, der inneren Kraftpapierschicht 103, der mittleren Kraftpapierschicht 104 und der äußeren Papier- oder Kraftpapierschicht 105, weist bevorzugt insgesamt eine Dicke von 500 - 650 µm, besonders bevorzugt 550 bis 620 µm auf. Bevorzugt weist der Dosenmantel 101 bestehend aus der Barrierelage 102, der inneren Kraftpapierschicht 103, der mittleren Kraftpapierschicht 104 und der äußeren Papier- oder Kraftpapierschicht 105 eine Zugfestigkeit CD von größer 300 N/15mm insbesondere größer 350 N/15mm auf, also von größer 20 kN/m insbesondere größer 23 kN/m. Bevorzugt weist der Dosenmantel 101 bestehend aus der Barrierelage 102, der inneren Kraftpapierschicht 103, der mittleren Kraftpapierschicht 104 und der äußeren Papier- oder Kraftpapierschicht 105 eine Grammatur von zumindest 400 g/m² insbesondere zumindest 450 g/m² auf.

Bevorzugt ist diese äußere Kraftpapierlage 105 auf der der Dosenaußenseite zugewandten Seite mit einer äußere Barriereschicht 106 versehen, beispielsweise einer einschichtigen Barrierefolie, mit oder ohne Pinholes, bevorzugt Polyethylen (PE) mit einer Grammatur von 15g/m² und/oder einer Dicke von 15 µm oder einem Lack überzogen.

Alternativ kann die äußere Lage nur aus einer äußeren Barriereschicht 106 in Form einer Barrierefolie bestehen, mit oder ohne Pinholes, bevorzugt PE mit 25 g/m². In diesem Fall können die innere Kraftpapierlage 103 und zweite Kraftpapierlage 104 in ihrer Materialstärke derart angepasst werden, dass die Gesamtmaterialstärke des Dosenmantels erhalten bleibt.

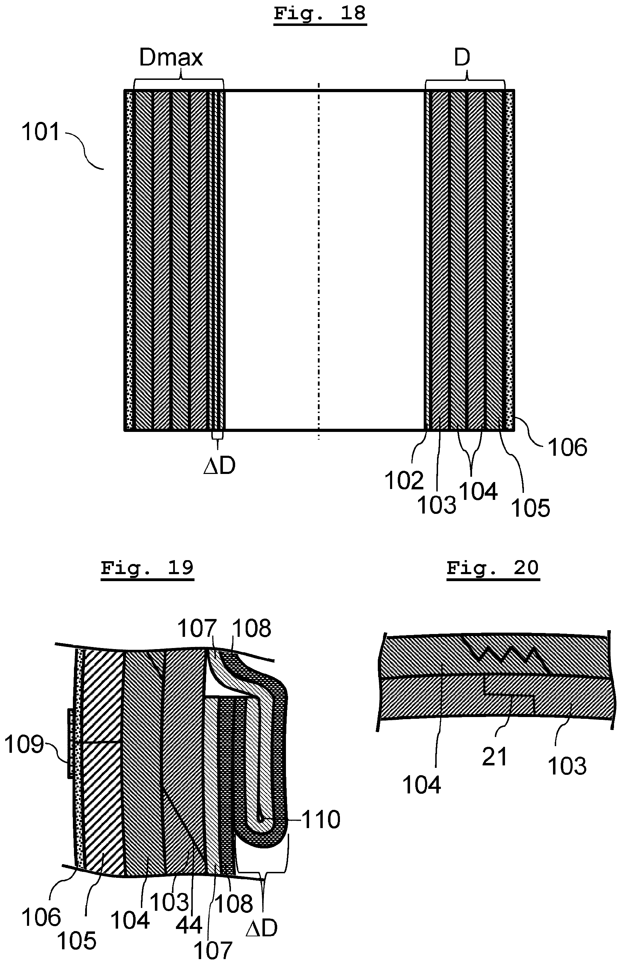

Je nach Höhe und Durchmesser der Dose ist vorgesehen, dass die mittleren Kraftpapierlagen 104 in größerer Anzahl als eins vorliegen können, beispielsweise werden bei einer Dose mit Höhe 245 mm und Durchmesser 175 mm eine Anzahl von zwei mittleren Lagen bevorzugt, wie in Fig. 18 veranschaulicht ist. Mit den bevorzugten Dicken je Kraftpapierlagen 103, 104, 105 von 0,160 µm und Dicke der Barrierelage 102 von 127 µm ergibt sich beispielsweise eine Gesamtdicke D von 767 µm.

Je nach Höhe und Durchmesser der Dose kann vorgesehen sein, dass die innere Kraftpapierlage 103, die mittlere Kraftpapierlage 104 und die äußere Kraftpapierlage 105 mit größerer Stärke beispielsweise bei einer Dose mit H: 245 mm und D: 175 mm mit einer Stärke von je 265 µm vorliegen. Mit einer Dicke der Barrierelage 102 von 127 µm ergibt sich beispielsweise eine Gesamtdicke D von 922 µm.

Die Erhöhung der Anzahl der Lagen ist gegenüber der Erhöhung der Dicke der Lagen vorteilhaft, da mit dünneren Lagen eine höhere Prozessgeschwindigkeit und eine höhere Stabilität des Dosenkörpers im Verhältnis zur Gesamtgrammatur des eingesetzten Kraftpapieres erreicht werden kann.

Der Zugfestigkeitsindex MD als Quotient aus Zugfestigkeit MD und Grammatur des verwendeten Kraftpapiers der Kraftpapierschicht 107 und der Kraftpapierlagen 103, 104, 105 liegt bevorzugt im Bereich von 70-120 Nm/g.

Der Zugfestigkeitsindex CD als Quotient aus Zugfestigkeit CD und Grammatur des verwendeten Kraftpapiers der Kraftpapierschicht 107 und der Kraftpapierlagen 103, 104, 105 liegt bevorzugt im Bereich von 35-70 Nm/g.

Bevorzugt ist der Zugfestigkeitsindex MD der verwendeten Kraftpapiere größer 80 Nm/g. Besonders bevorzugt ist der Zugfestigkeitsindex MD größer 100 Nm/g.

Besonders bevorzugt ist der Zugfestigkeitsindex CD der verwendeten Kraftpapiere größer 40 Nm/g. Besonders bevorzugt ist der Zugfestigkeitsindex CD größer 50 Nm/g.

Bevorzugt umfasst der Schichtaufbau neben der Kraftpapierschicht 107 zumindest zwei weitere Kraftpapierlagen 103, 104 mit den angegebenen Zugfestigkeitsindizes MD und CD. Die Kraftpapierschicht 107 oder zumindest eine der weiteren Kraftpapierlagen 103, 104 kann auch aus einem anderen Karton- bzw. Papiermaterial gebildet sein, welches die angegebenen Zugfestigkeitsindizes MD und CD aufweist. Kraftpapier zeichnet sich gegenüber herkömmlichen Papieren durch größere Zugfestigkeitsindizes MD und insbesondere CD (cross direction) aus.

Bevorzugt ist das Kraftpapier der Kraftpapierschicht 107 und der Kraftpapierlagen 103, 104 ungebleicht. Das Papier oder Kraftpapier der äußeren Papier- oder Kraftpapierlage 105 kann gebleicht sein, was für eine Bedruckung mit Designs an deren Außenseite vorteilhaft sein kann. Die äußere Papier- oder Kraftpapierlage 105 kann bereits vor dem Wickeln mit einem Produktdesign bedruckt sein, wobei diese Bedruckung vorteilhaft zwischen der Papier- oder Kraftpapierlage 105 und der äußeren Barriereschicht 106 vorliegen kann. Das Schneiden in der Schneidvorrichtung 26 erfolgt dann registriert hinsichtlich der Bedruckung.

In Fig. 19 ist ein Querschnitt durch einen besonders bevorzugten Aufbau des Dosenmantels 101 gezeigt. Bei diesem Aufbau weisen die innere Kraftpapierlage 103 und die mittlere Kraftpapierlage 104 schräg geformte seitliche Ränder auf, sodass sich die beiden am jeweiligen Bahnmaterial gegenüberliegenden Ränder der Lagen gegenseitig überlappen, jedoch ohne, oder ohne eine wesentliche, Erhöhung der Schichtdicke der Lage im Überlappungsbereich. Alternativ zur schrägen Form eignen sich auch andere Formen der Ränder, wie beispielsweise gestufte Ränder oder ineinandergreifende Ränder, wie in Fig. 20 veranschaulicht. Allgemein formuliert wird bevorzugt zumindest einer der beiden Ränder zumindest einer der Kraftpapierlagen 103, 104, 105 mit einer Form versehen, welche zu einer Reduktion der Dicke des Überlappungsbereichs der beiden Ränder führt. Besonders bevorzugt, werden beide Ränder zumindest einer der Kraftpapierlagen 103, 104, 105 mit einer Form versehen, sodass die Dicke der aufeinanderliegenden Ränder gleich der Dicke der Lage selbst ist. Besonders bevorzugt wird die innerste Kraftpapierlage 103 mit einer solchen Struktur versehen. Bevorzugt wird zumindest eine vorhandene mittlere Kraftpapierlage 104 mit einer solchen Struktur versehen, besonders bevorzugt alle vorhandenen mittleren Kraftpapierlagen 104.

Wie in Fig. 19 dargestellt treffen sich die Ränder der äußeren Kraftpapierlage 105 bevorzugt auf Stoß, wobei der Spalt im Stoßbereich abgedichtet wird, indem ein Streifen 109 (auch als Stripe bezeichnet) aus PE-, PET- oder PP Folie aufgetragen wird, oder ein dichtendes Material mittels eines Sprühkopfes nach der Dosenkörperformung aufgebracht wird. Die sich auf Stoß treffenden Ränder der äußeren Kraftpapierlage 105 sind vorteilhaft, da der resultierende Spalt regelmäßiger ist und somit optisch ansprechender und kein in der Schichtdicke reduzierter Randbereich der äußeren Kraftpapierlage 105 vorliegt, welcher gegenüber mechanischen Einwirkungen von außen weniger stabil wäre.

Weniger bevorzugt können sich auch die Ränder der inneren Kraftpapierlage 103 und/oder die Ränder der mittleren Kraftpapierlagen 104 auf Stoß treffen, wobei vermutet wird, dass sich dies negativ auf die Stabilität des Schichtaufbaus auswirken könnte.

Beim erfindungsgemäßen Verfahren zur Herstellung des Dosenmantels 101 wird zuerst die Barrierelage 102 als Bahnmaterial in Längsrichtung eines Dorns einer Wickelmaschine zugeführt, und in Längsrichtung des Dorns weiterbewegt. Die beiden Ränder werden um den Dorn geformt, sodass sich diese Ränder auf der anderen Seite des Dorns treffen und der Dorn nun vom Bahnmaterial umschlossen ist.

Zur Herstellung der Faltnaht werden bevorzugt die beiden Ränder des Bahnmaterials der Barrierelage 102 mit dem Barrierelaminat 108 aneinanderliegend verschweißt. Dazu werden die beiden Ränder vom Dorn weg aufgebogen, aneinandergelegt und verschweißt. Nach dem Verschweißen werden die beiden aneinandergeschweißten Ränder auf eine Seite umgeschlagen, sodass die aneinandergeschweißten Ränder mit einer ihrer Kraftpapierschichten 107 auf der Kraftpapierschicht 107 des den Dorn umhüllenden Bereichs der Barrierelage 102 zu liegen kommen, wobei bereits zumindest eine der genannten Kraftpapierschicht 107 mit Leim versehen sein kann, um die beiden Kraftpapierschichten 107 fest zu verbinden. Bevorzugt ist aber die Barrierelage 102 an deren Außenseite, also der Kraftpapierschicht 107 nicht mit Leim versehen.

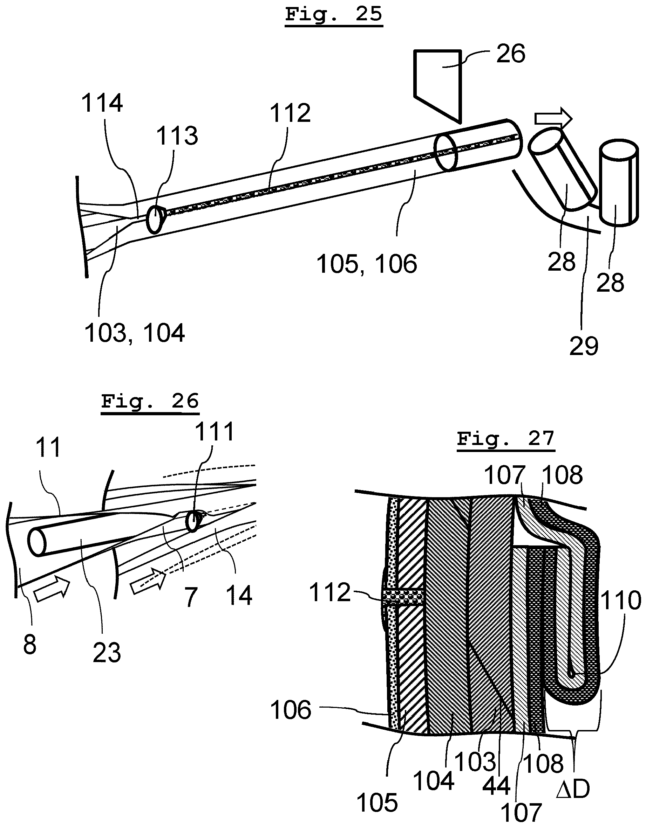

Besonders bevorzugt, kann daher die Wickelmaschine als Verbesserung des bekannten Stands der Technik mit einer Auftragsvorrichtung, beispielsweise mit einer Düse 111 versehen werden, welche gezielt Klebstoff (z.b. Leim oder Hotmelt) auf zumindest einen der beiden aneinanderliegenden Bereiche der Kraftpapierschichten 107 im Bereich der Faltnaht aufbringt. Dies ist in Fig. 26 dargestellt. Bevorzugt wird Klebstoff dabei gezielt in den Freiraum 110 eingebracht, welcher beim Umlegen der aneinander verschweißten Ränder im Eckbereich der 180° umgefalteten Kraftpapierschicht 107 aufgrund der Starrheit des Kraftpapiers entstehen würde bzw. könnte. Anders ausgedrückt wird der Klebstoff bevorzugt auf den Falz oder zumindest nahe dem Falz der nach außen abstehenden Überlappung der Barrierelage 102 aufgebracht, sodass sich der Klebstoff beim Umlegen der Überlappung auf die Barrierelage 102 zwischen der Überlappung und der darunter befindlichen, zylindrisch geformten Barrierelage 102 verteilt.

Dadurch wird vorteilhaft ein Lufteinschluss in diesem Freiraum 110 verhindert, welcher sich negativ auf die Stabilität des Dosenmantels 101 auswirken könnte. Das eingebrachte Material, bevorzugt Leim 22, stützt im ausgehärteten Zustand die Kraftpapierschicht 107 im Bereich des 180° Knicks, sodass in der Dose entstehender Druck nicht zum Abreißen der Fasern der Kraftpapierschicht 107 an der Stelle des Knicks führt. Zudem würde der Innendruck der Dose einen Lufteinschluss im Schichtaufbau unter Druck setzen, was dazu führen würde, dass der Druck im Lufteinschluss den Schichtaufbau aus seinem Inneren heraus beanspruchen würde, bzw. dass die Luft in Richtung der mit Deckeln verschlossen Enden zu entweichen trachtet, was dort zu schleichenden Schäden führen kann.

Alternativ kann die Faltnaht auch hergestellt werden, indem zuerst ein Rand des Bahnmaterials der Barrierelage 102 um 180° zurück gefaltet wird und die Kraftpapierschicht 107 des zurückgeschlagenen Randes mit der sich dann darunter befindlichen Kraftpapierschicht 107 verleimt wird. Bevorzugt ist auch in diesem Fall eine Auftragsvorrichtung, beispielsweise eine Düse, vorgesehen, welche gezielt Klebstoff auf zumindest einen der beiden aneinanderliegenden Bereiche der Kraftpapierschichten 107 im Bereich der Zurückfaltung und insbesondere auch in den Freiraum 110 einbringt, welcher beim Umlegen der 180° umgefalteten Kraftpapierschicht 107 aufgrund der Starrheit des Kraftpapiers entsteht. Das Zurückfalten und Anleimen erfolgt bevorzugt unmittelbar vor der Wickelmaschine beim Zuführen der Materialbahn. Die um den Dorn gelegte Materialbahn weist daher auf der einen Seite einen normalen bzw. einlagigen Rand auf und auf der anderen Seite eine doppelte Lage durch Zurückfalten des Randes auf die Lage selbst, wobei der doppelte Rand an der vom Dorn abgewandten Seite das Barrierelaminat 108 aufweist. Am Wickeldorn wird nun zuerst der doppelte Rand mit dem nach außen weisenden Barrierelaminat 108 von einer Seite des Dorns kommenden angelegt und nachfolgend von der anderen Seite des Dorns der einfache Randbereich mit zum Dorn weisenden Barrierelaminat 108 um den Dorn gelegt, sodass dessen Barrierelaminat 108 auf dem Barrierelaminat 108 des umgebogenen Randes zu liegen kommt und mit diesem verschweißt wird. Das Ergebnis dieser Herstellungsvariante ist ebenfalls eine Faltnaht wie in den Fig. 14, 15, 19 und 21-23 dargestellt.

Im nächsten Schritt wird die innere Kraftpapierlage 103 um die Barrierelage 102 gelegt, indem auch diese als Bahnmaterial bevorzugt in Längsrichtung des Dorns der Wickelmaschine zugeführt und in Längsrichtung des Dorns weiterbewegt wird. Die beiden Ränder der inneren Kraftpapierlage 103 werden um die am Dorn befindliche Barrierelage 102 geformt, sodass sich diese Ränder auf der anderen Seite des Dorns treffen und die am Dorn befindliche Barrierelage 102 nun vom Bahnmaterial der inneren Kraftpapierlage 103 umschlossen ist. Wie beschrieben überlappen sich die Ränder der inneren Kraftpapierlage 103 bevorzugt gegenseitig, sodass diese aneinander verleimt werden. Die innere Kraftpapierlage 103 ist auf der Innenseite mit Leim versehen, beispielsweise indem dieser beim Zuführen des Bahnmaterials aufgetragen wird, wobei sich der Leim beim Anformen bzw. Anpressen der inneren Kraftpapierlage 103 an die Kraftpapierschicht 107 der Barrierelage 102 vollflächig zwischen den Lagen verteilt.

In den nächsten Schritten werden 0 bis bevorzugt max. 3 mittlere Kraftpapierlagen 104 nacheinander um die innere Kraftpapierlage 103 gelegt, indem auch diese als Bahnmaterial bevorzugt in Längsrichtung des Dorns der Wickelmaschine zugeführt und in Längsrichtung des Dorns weiterbewegt werden. Die beiden Ränder jeder mittleren Kraftpapierlage 104 werden um die bereits am Dorn befindliche Kraftpapierlage 103 geformt, sodass sich diese Ränder auf der anderen Seite des Dorns treffen und die am Dorn befindliche Kraftpapierlage 103 nun vom Bahnmaterial umschlossen ist. Wie beschrieben überlappen sich die Ränder jeder mittleren Kraftpapierlage 104 bevorzugt gegenseitig, sodass diese aneinander verleimt werden. Jede mittlere Kraftpapierlage 104 ist auf der Innenseite mit Leim versehen, beispielsweise indem dieser beim Zuführen des Bahnmaterials aufgetragen wird, wobei sich der Leim beim Anformen bzw. Anpressen der mittlere Kraftpapierlage 104 an die bereits am Dorn befindliche Kraftpapierlage 103 vollflächig zwischen den Lagen verteilt.

Im nächsten Schritt wird die äußere Papier- oder Kraftpapierlage 105 um die äußere bereits am Dorn befindliche Kraftpapierlage 103, 104 geformt, indem auch diese als Bahnmaterial bevorzugt in Längsrichtung des Dorns der Wickelmaschine zugeführt und in Längsrichtung des Dorns weiterbewegt wird. Die beiden Ränder der äußere Kraftpapierlage 105 werden um die äußere bereits am Dorn befindliche Kraftpapierlage 103, 104 geformt, sodass sich diese Ränder auf der anderen Seite des Dorns treffen und die bereits am Dorn befindliche Kraftpapierlage 103, 104 nun vom Bahnmaterial umschlossen ist. Wie beschrieben überlappen sich die Ränder der äußeren Kraftpapierlage 105 bevorzugt nicht gegenseitig, sodass sich diese auf Stoß treffen. Die äußere Kraftpapierlage 105 ist auf der Innenseite mit Leim versehen, beispielsweise indem dieser beim Zuführen des Bahnmaterials aufgetragen wird, wobei sich der Leim beim Anformen bzw. Anpressen der äußere Kraftpapierlage 105 an die darunter befindliche Kraftpapierlage 103, 104 vollflächig zwischen den Lagen verteilt.

Die äußere Kraftpapierlage 105 kann, wie in Fig. 19 veranschaulicht, bevorzugt bereits eine äußere Barriereschicht 106 aufweisen, also als Laminat oder einseitig beschichtetes Bahnmaterial zugeführt werden, sodass diese eine flüssigkeitsfeste bzw. flüssigkeitsabweisende Außenseite aufweist. Beispielsweise kann die äußere Kraftpapierlage 105 mit einer wasserfesten bzw. feuchtigkeitsdichten Bedruckung versehen sein.

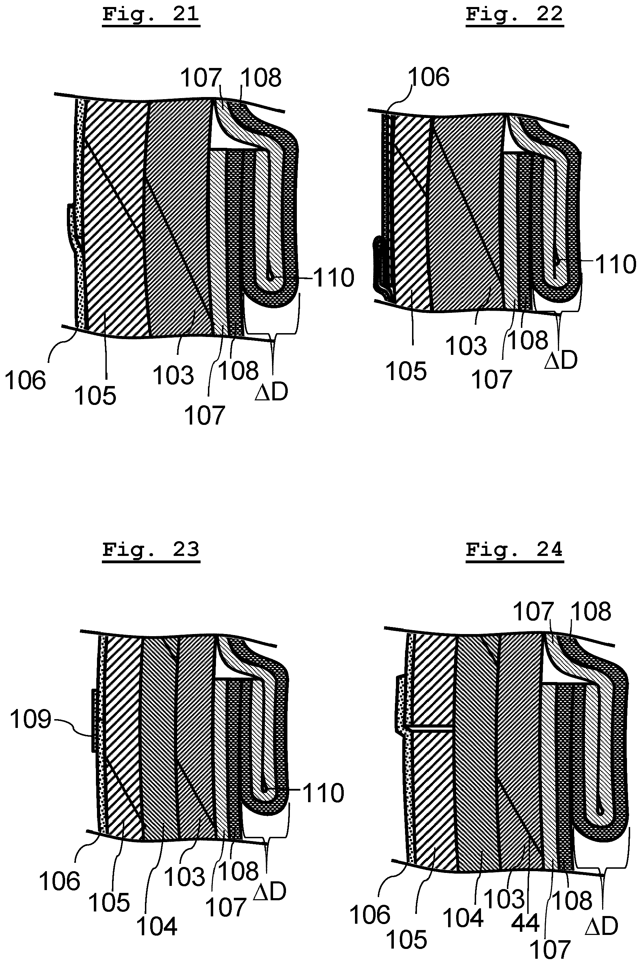

Falls die äußere Kraftpapierlage 105 beim Zuführen noch keine flüssigkeitsfeste bzw. flüssigkeitsabweisende Außenseite aufweist, kann diese in der Wickelmaschine oder nach der Wickelmaschine mit einer solchen versehen werden. Beispielsweise kann eine flüssigkeitsfeste bzw. flüssigkeitsabweisende Folie oder ein Laminat mit der Wickelmaschine um die äußere Kraftpapierlage 105 angebracht werden. Beispielsweise kann der geformte Hohlzylinder nach dem Wickeln mit einer flüssigkeitsfesten bzw. flüssigkeitsabweisenden Substanz insbesondere einem Lack besprüht bzw. bedruckt werden. Sollte eine flüssigkeitsfeste bzw. flüssigkeitsabweisende Folie oder ein Laminat mit der Wickelmaschine um die äußere Kraftpapierlage 105 angebracht werden, kann diese Folie bzw. das Laminat mit Kunststoffseite an Kunststoffseite verschweißt werden, um die äußere Kraftpapierlage 105 dicht zu umschließen. Im Fall einer Folie reicht eine einfache Überlappung, wie in Fig. 21 veranschaulicht ist. Im Fall eines Laminats beispielsweise aus Folie und dünnem Druck- bzw. Etikettenpapier kann auch bei dieser eine Faltnaht vorgesehen sein, wie in Fig. 22 veranschaulicht. Wie in Fig. 23 dargestellt, kann eine Barriereschicht 106 auch in Form einer zumindest an der Außenseite dichten Druck- bzw. Etikettenlage über der äußeren Kraftpapierlage 105 angebracht werden, welche dann beispielsweise mit einem aufgeklebten Streifen 109 im Stoßbereich ihrer beiden Ränder abgedichtet wird.

Sofern die äußere Kraftpapierlage 105 beim Zuführen bereits eine flüssigkeitsfeste bzw. flüssigkeitsabweisende Außenseite aufweist, wird im nächsten Schritt bevorzugt noch an der Wickelmaschine der Stoßbereich der äußeren Lage abgedichtet, beispielsweise indem flüssigkeitsfestes bzw. flüssigkeitsabweisendes Material als Flüssigkeit aufgetragen wird, oder in Form eines Streifens 109, insbesondere Klebestreifens, angebracht wird, wie in Fig. 19 veranschaulicht ist.

Die Außennaht der äußeren Papier- oder Kraftpapierlage 105 oder einer weiteren darüber angeordneten Lage kann somit als Faltnaht, als einfache Überlappung oder Stoß an Stoß (Stoßnaht) ausgebildet sein. Die Stoßnaht kann durch Hotmelt, einen Stripe bzw. ein Tape oder eine versiegelnde Flüssigkeit abgedichtet werden, wobei diese Mittel bevorzugt jeweils bereits an der Wickelmaschine nach Wicklung der äußersten Lage und vor dem Schneiden der einzelnen Hohlzylinder appliziert werden. Das Stripe bzw. das Tape kann selbstklebend ausgeführt sein, oder als Kunststoff- insbesondere PE-Streifen vorliegen, der durch Ultraschallschweißen fixiert wird.

Bevorzugt wird, wie in Fig. 25 veranschaulicht, Hotmelt 112 in der Wickelmaschine mit einer Düse 113 auf das am Dorn befindliche und an diesem an der Düse 113 vorbeibewegte Papierrohr appliziert. Bevorzugt ist die Düse senkrecht auf den Spalt einer in Längsrichtung des Papierrohrs verlaufenden Stoßnaht 114 der äußersten in der Wickelmaschine aufgebrachten Lage gerichtet. Die Düse 113 kann im Querschnitt zylindrisch oder rechteckig ausgeführt sein und eine gerade bzw. ebene Öffnungsfläche aufweisen.

Bevorzugt ist die Düsenöffnungsfläche jedoch in Umfangsrichtung des Papierrohres gesehen konkav ausgeführt, also an die Zylinderform des Rohres angepasst, wobei die Öffnungsfläche der Düse bevorzugt einen einheitlichen Abstand zum Rohr aufweist.

Das Hotmelt 112 wird bevorzugt nach dem Wickeln der äußersten Lage direkt an der Wickelmaschine aufgebracht, wobei die äußersten Lage dabei bereits eine dichte äußere Barriereschicht 106 ist oder aufweist. Das Hotmelt 112 wird appliziert um die saugfähigen Schnittränder der äußersten Lage abzudichten und/oder um die entlang der Stoßnaht 114 freiliegende darunterliegende Kraftpapierlage 103 oder 104 abzudichten. Bevorzugt ist die äußere Lage dabei aus einem saugfähigen Material, insbesondere Papier oder Kraftpapier gebildet, das an seiner Außenseite mit einem feuchtigkeitsbeständigen Material versehen ist, beispielsweise mit einer feuchtigkeitsbeständigen Folie laminiert oder mit einer feuchtigkeitsbeständigen Substanz beschichtet ist. Der Spalt der Stoßnaht 114 liegt bevorzugt mit einer Breite im Bereich von einschließlich 0,5-4 mm vor. Der Auftrag von Hotmelt 112 erfolgt bevorzugt in Form eines den Spalt der Stoßnaht 114 überragenden Streifens, wobei die Breite des Streifens aus Hotmelt 112 bevorzugt zumindest 1 mm, insbesondere zumindest 2 mm breiter ist als die Breite des Spalts der Stoßnaht 114. Beispielsweise beträgt die Breite des Spalts der Stoßnaht 114 3 mm und die Breite des Hotmelt-Streifens 6 mm. Das Hotmelt 112 wird im erhitzen Zustand, beispielsweise mit 160° - 190° C aufgebracht und erhärtet durch Abkühlung, bis die einzelnen Zylinder vom Dorn 23 der Wickelmaschine geschnitten werden. Bevorzugt kann dies mit einer Kühlvorrichtung, beispielsweise in Form eines Gebläses, unterstützt werden. In Fig. 27 ist ein beispielhafter Dosenmantel 101 mit Hot-Melt-Versiegelung der Stoßnaht der äußersten Lage dargestellt. Durch die Faltnaht bzw. Anakondaversiegelung der Barrierelage 102, die direkt verleimten Kraftpapierlagen 103, 104, die äußere Barrierelage 106 und die versiegelte Stoßnaht der äußeren Lage ergibt sich ein besonders bevorzugter Dosenkörper, da durch die Versiegelung der Stoßnaht mit einem Klebstoff eine sehr flacher bzw. homogener Außenumfang der Dose resultiert. Der durch den Klebstoff bzw. das Hotmelt 112 gebildete Film auf der äußere Barrierelage 106 beträgt beispielsweise lediglich 0,05 bis 0,1 mm. Anstelle der äußeren Kraftpapierlage 105, welche die Barrierelage 106 aufweist, kann auch ein anders Papier- oder Kartonmaterial verwendet werden, bevorzugt eines aus oder enthaltend recyceltes Papier- bzw. Fasermaterial.

In Fig. 24 ist eine weitere Versiegelungsvariante der äußeren Lage dargestellt, bei welcher die äußere Kraftpapierlage 105 mit einer äußeren Barriereschicht 106 in Form einer Folie versehen ist, wobei Kraftpapierlage 105 und die Folie als Laminat vorliegen und somit gemeinsam als Materialbahn der Wickelvorrichtung zugeführt werden. Die Folienschicht ist dabei in Querrichtung der Materialbahn länger ausgeführt, als die Kraftpapierlage 105, sodass der einseitig überstehende Rand der Folienschicht am anderen nicht überstehenden Rand der Folienschicht zu liegen kommt, wie in Fig. 24 zu erkennen ist. Dabei kann der überstehende Rand der Folienschicht auf der darunter liegenden das Kraftpapier nicht überlappenden Folienschicht aufgeschmolzen oder verschweißt werden oder es kann auf der Unterseite des überlappenden Bereichs ein Klebstoff aufgebracht sein, insbesondere ein aktivierbarer, insbesondere wärmeaktivierbarer Klebstoff, zur Verklebung der Folienschicht auf sich selbst.

Nachdem die Lagen im ersten Schritt des Verfahrens zu einem rohrförmigen Körper gewickelt und verbunden wurden, werden am Ende des ersten Schritts des erfindungsgemäßen Verfahrens einzelne Hohlzylinder vom Dorn geschnitten, wozu bekannte Schneidmaschinen verwendet werden können.

Die einzelnen Hohlzylinder werden nachfolgend im zweiten Schritt des erfindungsgemäßen Verfahrens an ihren beiden Enden im Randbereich aufgebogen.

Das Aufbiegen erfolgt bevorzugt in einem Längenbereich von 5 mm, wobei der äußere Rand um 2,5 mm nach außen gebogen wird. Vom äußeren Rand geht der aufgebogene Bereich bevorzugt entlang einer Kreisbahn mit einem Radius von bevorzugt 3-4 mm insbesondere 3,3-3,5 mm in den nicht aufgebogenen Mantelbereich über.

Die abgeschnittenen oder bereits aufgebogenen Ränder werden bevorzugt mit einer Siegelflüssigkeit versehen, damit deren Aufnahmefähigkeit von Feuchtigkeit herabgesetzt wird. Dies erfolgt bevorzugt dadurch, dass während des Aufbiegens diese Siegelflüssigkeit aufgetragen wird. Alternativ kann das Versiegeln der Schnittränder durch Aufbringen eines Tapes oder eines Schrumpfschlauches erfolgen.

Die aufgebogenen und endversiegelten Hohlzylinder werden nachfolgend im dritten Schritt des erfindungsgemäßen Verfahrens an eine Dosenschließmaschine übergeben, bei welcher zuerst ein Ende, bevorzugt das untere Ende, der Hohlzylinder mit einem ersten Verschlusselement, beispielsweise zuerst einem Bodenelement 4 verschlossen wird. Das Bodenelement 4 ist bevorzugt ein Aluminiumbodenelement einer herkömmlichen Aluminiumdose, welche zumindest annähernd dasselbe Volumen bzw. denselben Durchmesser wie die gegenständliche Dose aufweist. Danach wird im vierten Schritt des erfindungsgemäßen Verfahrens das Medium, insbesondere ein kohlensäurehaltiges Getränk in den unten verschlossenen Hohlzylinder gefüllt, bevorzugt in einer Menge von 0,25 Liter.

Der gefüllte Hohlzylinder wird nachfolgend im fünften Schritt des erfindungsgemäßen Verfahrens oben mit einem zweiten Verschlusselement, beispielsweise mit einem Deckelelement 5 verschlossen. Der Deckel ist bevorzugt ein Aluminiumdeckel einer herkömmlichen Aluminiumdose, welche zumindest annähernd dasselbe Volumen bzw. denselben Durchmesser wie die gegenständliche Dose aufweist.

Das Verschließen und Füllen erfolgt bevorzugt an einer getakteten Anlage mit einem Durchsatz von 80.000 Dosen / Stunde.

Bevorzugt werden an der Wickelanlage 40.000 Dosenkörper / Stunde hergestellt, was eine Geschwindigkeit von zirka 1,5 m/s des gefertigten Rohres in Richtung des Wickeldorns bedeutet. Die gewünschte Prozessleistung von 80.000 Dosen/h kann durch die Spiegelung der Maschine erreicht werden, wobei die geflanschten Dosenkörper aus beiden Maschineneinheiten vor dem Verschließer für den Dosenboden zusammengeführt werden.

Bevorzugt können die gegenständlichen Dosenmäntel 2, welche von der langsameren Wickelanlage stammen gemeinsam mit herkömmlichen Aluminiumdosenmänteln an derselben schnelleren Verschluss- und Befüllungsanlage verschlossen werden und besonders bevorzugt mit denselben Bodenelementen und denselben Deckeln und ohne Umrüstaufwand bzw. Zeitunterbrechung. Dies bedeutet, dass die Geschwindigkeit der Wickelanlage nicht mehr prozesskritisch ist und die Befüllungsanlage unabhängig von dieser mit voller Prozessleistung betrieben werden kann.

Dabei können beim erfindungsgemäßen Verfahren auch Verbunddosen und herkömmlichen Aluminiumdosen chargenweise oder abwechselnd an derselben Anlage befüllt und verschlossen werden, sodass die geringere Fertigungsgeschwindigkeit einer einzelnen Wickelanlage durch die Produktion von herkömmlichen Aluminiumdosen ausgeglichen wird. Beispielsweise können an der Anlage dann 40.000 Dosen der Wickelmaschine / Stunde und 40.000 Aluminiumdosen / Stunde hergestellt werden, sodass vorteilhaft zwei Produktlinien, also umweltfreundliche Verbunddosen und erprobte Aluminiumdosen zeitgleich und kontinuierlich auf einer Anlage herstellbar sind.

Es kann exakt der Bedarf an Verbundmanteldosen abgedeckt werden und die restliche Kapazität für Standarddosen verwendet werden, was insbesondere bei Produkteinführung vorteilhaft ist, da der Absatz von Verbundmanteldosen zu Beginn zu keiner Vollauslastung einer üblichen Abfüllanlage führen würde. Durch die zeitgleiche oder zeitlich aufeinanderfolgende Verwendung der Abfüllanlage für Verbundmanteldosen und herkömmliche Aludosen wird somit zusätzlich eine weitere Hemmschwelle für die Produktumstellung gesenkt, da weiterhin Aludosen hergestellt werden können und nur nach und nach zu einem größer werdenden Anteil durch Verbundmanteldosen ersetzt werden können.

In den Fig. 10 bis 12 ist eine Abfüll- und Verschlussanlage dargestellt, mit welcher sowohl Rohrabschnitte 28 bzw. Dosenmäntel 101 aus Verbundmaterial, welche hauptsächlich aus Papier- oder Kartonmaterial bestehen und Dosenmäntel 117 aus Aluminium oder gegebenenfalls auch Weißblech befüllt und verschlossen werden. Die Anlage zum Befüllen und Verschließen von Dosen weist eine erste Zuführvorrichtung 115 auf, mit welche die Dosenmäntel 101 aus Verbundmaterial bereitgestellt werden und weist eine zweite Zuführvorrichtung 116 auf, mit welcher herkömmliche Dosenmäntel 117 bereitgestellt werden. Die Zuführvorrichtung 115, 116 können wie dargestellt lineare Zuführvorrichtungen wie Förderbänder oder dergleichen sein. Die Zuführvorrichtung 115, 116 können auch Roboter oder andere Handhabungsvorrichtungen sein, welche die Dosenmäntel 101, 117 auf die Transportvorrichtung 119 heben. Im Fall eines Roboters oder einer anderen Handhabungsvorrichtung, welche abwechselnd Dosenmäntel 101 aus Verbundmaterial und herkömmliche Dosenmäntel 117 auf der Transportvorrichtung 119 platziert, können die Zuführvorrichtungen 115, 116 auch in einer Vorrichtung realisiert sein, welche beide Aufgaben erfüllt.

Im Fall der Zuführung mit linearen Fördervorrichtungen wird bevorzugt über zumindest ein Stellelement 118 gesteuert, von welcher Zuführvorrichtung 115, 116 Dosenmäntel 101, 117 auf die Transportvorrichtung 119 der Anlage gelangen, bzw. in welcher Reihenfolge und/oder welchem Verhältnis Dosenmäntel 101, 117 auf die Transportvorrichtung 119 gelangen.

Bevorzugt ist die Zuführvorrichtung 115 für die Dosenmäntel 101 aus Verbundmaterial direkt an die Herstellungsvorrichtung dieser Dosenmäntel 101 angeschlossen, wobei vor dem Stellelement 118 vorteilhaft eine Pufferzone eingerichtet sein kann. Weniger bevorzugt können die Dosenmäntel 101 von einer Herstellungsvorrichtung chargenweise zur Zuführvorrichtung 115 angeliefert werden und dort zwischengelagert werden. Besonders bevorzugt handelt es sich bei den Dosenmänteln 101 um Dosenmäntel 101 gemäß den Ausführungsvarianten der Fig. 13-24 und insbesondere 27.

Von der Zuführvorrichtung 116 werden vorgefertigte herkömmliche Dosenmäntel 117 aus Aluminium oder Weißblech aus dem Lagerbestand zugeführt, da die Herstellung dieser am Ort der Abfüllung praktisch unmöglich ist.

Die von den Zuführvorrichtung 115 und 116 in einem bevorzugt wählbaren Verhältnis an die Transportvorrichtung 119 übergebenen Dosenmäntel 101, 117 werden von dieser bevorzugt durch alle Stationen der Anlage transportiert.

Die erste Station ist eine erste Verschlussvorrichtung 30, mit welcher erste Verschlusselemente, beispielsweise Bodenelemente 4, an den beidseitig offenen Dosenmänteln 101, 117 angebracht werden. Das Anbringen der Verschlusselemente erfolgt mit einer Bördelungsvorrichtung 32, welche jeweils ein Verschlusselement mit einem Dosenmantel 101, 117 druckdicht bördelt.

Die einseitig verschlossenen Dosenmäntel 101, 117 werden von der Transportvorrichtung 119 weiter zur zweiten Station, der Füllvorrichtung, transportiert, wobei die Dosenmäntel 101, 117 auf den Weg dorthin gewendet werden, damit das verschlossene Ende dieser unten liegt. Die Wendevorrichtung ist nicht dargestellt.

Die Füllvorrichtung ist bevorzugt eine Karussell-Füllstation 33, in welcher mehrere einseitig verschlossene Dosenmäntel 101, 117 zeitlich überlappend gefüllt werden, besonders bevorzugt mit einem kohlesäurehaltigen Getränk, insbesondere einem stark kohlesäurehaltigen Getränk wie Cola oder andere kohlesäurehaltige Softdrinks.

Von der Füllvorrichtung transportiert die Transportvorrichtung 119 die gefüllten Dosenmäntel 101, 117 zur dritten Station, welche eine weitere Verschlussvorrichtung 34 ist.

Mit der zweiten Verschlussvorrichtung 34 werden zweite Verschlusselemente, beispielsweise Deckel 5 an den einseitig offenen, gefüllten Dosenmänteln 101, 117 angebracht. Das Anbringen der Verschlusselemente erfolgt mit einer Bördelungsvorrichtung 35, welche jeweils ein Verschlusselement mit einem Dosenmantel 101, 117 druckdicht bördelt.

Beim ersten Verschlusselement kann es sich um das Bodenelement 4 und beim zweiten Verschlusselement um den Deckel 5 handeln, oder umgekehrt.

Nach der zweiten Verschlussvorrichtung 34 folgt bevorzugt eine Weiche 127 mit welcher die Dosen mit Dosenmantel 101 hauptsächlich aus Karton, bzw. Papiermaterial und die Dosen mit Dosenmänteln 117 aus Aluminium oder Weißblech auf getrennte Transportvorrichtungen 128, 129 aufgeteilt werden. Alternativ können die Dosen auch von Robotern oder anderen Handhabungsvorrichtungen von der Transportvorrichtung 119 entnommen werden. Danach werden die unterschiedlichen Dosen jeweils sortenrein gelagert oder für den weiteren Transport verpackt.

Alternativ kann das Verpacken auch gemeinsam erfolgen, beispielsweise um in einem Transportgebinde eine Mischung der beiden Arten von Dosen zu platzieren. Vorteilhaft können so in einer bekannten Plastikhülle oder Kartonschachtel für Dosen, beispielsweise drei herkömmliche Aluminiumdosen und eine Verbundmanteldose verpackt werden, um skeptische Konsumenten von der neuen Verpackung überzeugen zu können. Durch das wählbare Mischverhältnis der unterschiedlichen Dosen kann dieses ideal an übliche Verpackungsgrößen angepasst werden, beispielsweise wie gerade beschrieben 3:1 für Viererpacks oder 5:1 für Sechserpacks, oder 23:1, 20:4 oder 18:6 für Paletten.

Das Mischverhältnis, mit welchem die Dosenmäntel 101, 117 aufeinanderfolgend in der Anlage verarbeitet werden, kann auch in größeren Blöcken von unterschiedlichen Dosenmänteln 101, 117 erfolgen, beispielsweise 24 Verbund-Dosenmäntel 101 abwechselnd mit 240 herkömmlichen Alumänteln, oder 40.000 Verbund-Dosenmäntel 101 abwechselnd mit 40.000 Alumänteln. Wobei eine geringere Blockgröße (Aufeinanderfolgende Anzahl von Dosenmänteln einer Art) der Verbund-Dosenmäntel 101 bevorzugt wird, da diese dann entsprechend der Geschwindigkeit der Wickelanlage befüllt werden können, ohne große Lagerhaltung der Dosenmäntel 101 zwischen der Wickelanlage und der Füllanlage. Bevorzugt beträgt das Mischverhältnis Verbund-Dosenmäntel 101 zu Alumäntel 1:x, wobei x größer gleich 1 ist und wobei die Blockgröße der Verbund-Dosenmäntel 101 bevorzugt unter 10 beträgt, besonders bevorzug 1 ist. Besonders vorteilhaft an einer kontinuierlichen Zuführung und Füllung der Verbund-Dosenmäntel 101 ist, dass dadurch eine an die Füllvorrichtung angebundenen Wickelvorrichtung kontinuierlich arbeiten kann, da längere Stillstände der Wickelvorrichtung problematisch sind, da dann bereits aufgebrachter Leim bereits vor dem Anbringen der Lagen des Hohlzylinders aushärten würde oder Auftragsvorrichtungen oder Düsen verstopfen könnten.

Bevorzugt wird in den Verschlussvorrichtungen 30, 34 jeweils nur eine Art von Verschlusselement für alle Arten von Dosenmänteln 101, 117 gleicher Größe verwendet.

Weniger bevorzugt werden für Dosenmäntel 101 aus Karton- bzw. Papierverbundmaterial und Dosenmäntel 117 aus Aluminium oder Weißblech jeweils eigene Verschlusselemente im benötigten Mischverhältnis bereitgestellt. Vorteilhaft daran ist, dass Verschlusselemente für die Dosenmäntel 101 aus Karton- bzw. Papierverbundmaterial verwendet werden können, welche speziell für dieses Material angepasst wurden.

Anstelle die Verschlusselemente wie dargestellt mit je einer Zuführeinheit bereit zu stellen, könnten weniger bevorzugt auch zwei solcher vorhanden sein, wobei eine Zuführeinheit Verschlusselemente für die Dosenmäntel 101 aus Karton- bzw. Papierverbundmaterial bereitstellt und die andere Verschlusselemente für die Dosenmäntel 117 aus Aluminium oder Weißblech. Selbiges gilt auch für die Bördelungsvorrichtungen 32, 35 sollten die unterschiedlichen Verschlusselemente oder Dosenmäntel 101, 117 unterschiedliche Bördelungsvorrichtungen benötigen bzw. solche vorteilhaft für diese sein. Die unterschiedlichen Bördelungsvorrichtungen 32, 35 können sich bevorzugt aufeinanderfolgend an der Transportvorrichtung befinden, wobei jede Bördelungsvorrichtung 32, 35 nur jene Dosenmäntel 101, 117 verschließt, für die sie ausgelegt ist.

Weniger bevorzugt kann das Zusammenführen bzw. Aufteilen der unterschiedlichen Dosenmänteln 101 auch erst unmittelbar vor bzw. unmittelbar nach der Füllvorrichtung 33 erfolgen. Dies bedeutet, dass von der Zuführvorrichtung 115 bereits unten verschlossene Dosenmäntel 101 aus Karton- oder Papierverbundmaterial unmittelbar vor der Füllvorrichtung 33 der Transportvorrichtung 119 zugeführt werden und/oder das Weichenelement 127 die befüllten Dosenmäntel unmittelbar nach der Füllvorrichtung 33 von der Transportvorrichtung 119 abführen kann, zur gesonderten Verschließung in einer eigenen Verschlussvorrichtung.

### Beispiel 1

Mit dem besonders bevorzugten Schichtaufbau der Fig. 27 wurden Getränkedosen mit einer Höhe von 134 mm und einem Außendurchmesser von 52,4 mm und mit einem Füllvolumen von 250 ml eines kohlensäurehaltigen Getränks hergestellt. Als Papier- oder Kraftpapierlage 105 wurde eine Papierlage 105 aus weniger reißfestem, holzfreiem Papier, konkret Lumiflex^{™} 110 gsm der Stora Enso AG verwendet, welches an der späteren Außenseite der Dose mit einer PE-Beschichtung versehen wurde. Die Getränkedosen wurde oben und unten mit Standard-Böden und -Deckeln von Aluminiumdosen mit Standardverschlussanlagen verschlossen.

Die verwendeten Schichten und der resultierende Schichtaufbau sind in der folgenden Tabelle spezifiziert.

| | Grammatur | Dicke | Zugfestigkeit MD lso 1s24-2 | Zugfestigkeit CD lso 1s24-2 |
|---|---|---|---|---|
| Barrierelaminat 108 | 45 g/m² | 45 µm | Nicht ermittelt | Nicht ermittelt |
| Kraftpapierschicht 107 | 60 g/m² | 82 µm | 7,0 kN/m | 3,5 kN/m |
| Kraftpapierlage 103 | 125 g/m² | 160 µm | > 10 kN/m | > 5 kN/m |
| Kraftpapierlage 104 | 125 g/m² | 160 µm | > 10 kN/m | > 5 kN/m |
| Papierlage 105 | 110 g/m² | 101 µm | 7,3 kN/m | 0,7 kN/m |
| äußere Barriere-schicht 106 (PE) | 15 g/m² | 15 µm | Nicht ermittelt | Nicht ermittelt |
| Gesamter Schichtaufbau | ca. 500 g/m² | ca. 600 µm | nicht ermittelt | > 23 kN/m |

Die Zugfestigkeit MD (Maschine Direction) gibt die Zugfestigkeit des Kraftpapiers in Längsrichtung des Dosenmantels 101 an, Zugfestigkeit CD (Cross Direction) gibt die Zugfestigkeit des Kraftpapiers in Umfangsrichtung des Dosenmantels 101 an. Es ist ersichtlich, dass das herkömmliche Papier der verwendeten Papierlage 105 insbesondere in Querrichtung (CD) eine deutlich geringere Zugfestigkeit aufweist.

Die Grammatur des gesamten Schichtaufbaus des Dosenmantels 101 ist gegenüber der Summe der Einzellagen aufgrund des Leimauftrags von 18 g/m² je Leimschicht erhöht. Der Leimauftrag beträgt durch die drei vollflächigen Leimschichten insgesamt 54 g/m².

Als Barrierelaminat 108 wurde ein Laminat mit dem Aufbau Kunststofffolie aus PE mit 25 µm Dicke, Aluminiumfolie mit 7 µm Dicke, Haftvermittler in Form von Surlyn mit 3 µm Dicke, Kunststofffolie aus PE mit 15 µm Dicke verwendet.

Für den Dosenmantel 101 wurde eine Zugfestigkeitsmessung in Umfangsrichtung des Dosenmantels durchgeführt, indem dieser in 15 mm breite Streifen geschnitten wurde. Bei dieser Messung wurde eine mittlere Zugfestigkeit von 374,3 N/15mm gemessen, was einer Zugfestigkeit von 25 kN/m entspricht.

Die so hergestellten Dosen waren für die Lagerung und den Transport des kohlensäurehaltigen Getränks geeignet.

Der besonders bevorzugte Schichtaufbau der Dose weist daher eine innere Barrierelage 102 aus einem Barrierelaminat 107 und einer Kraftpapierschicht 108 mit in Längsrichtung der Dose verlaufender Faltnaht auf, darüber zwei jeweils gewickelte Kraftpapierlagen 103, 104 mit je in Längsrichtung der Dose verlaufender überlappender Naht, wobei die Kraftpapierlagen 103, 104 im Nahtbereich zumindest an einem Rand eine reduzierte Dicke aufweisen, darüber eine gewickelte Lage aus Papier- oder Kartonmaterial, welche an der Außenseite eine äußere Barriereschicht 106 aufweist und eine in Längsrichtung der Dose verlaufende und einen Spalt bildende Stoßnaht, welche mit Hotmelt abgedichtet ist, wobei die Kraftpapierlagen 103, 104 mit ihren Kraftpapieroberflächen direkt aneinander und an den darunter und darüberliegenden Lagen verklebt, insbesondere verleimt sind.

Vorteilhaft an den hergestellten Dosen sind die Recycelbarkeit und die gute Ökobilanz. Da die Dose von den verwendeten Materialien einer kunststoffbeschichteten Kartonverpackung ähnlich ist, können analog zu dieser beim Recycling mit bekannten Löseverfahren die Aluminium-Teile, die Papierlagen und die Kunststofffolien voneinander getrennt und sortenrein der Wiederverwertung zugeführt werden. Insbesondere der hohe Anteil an erneuerbaren Anteilen, speziell in Form von Papier macht die Dose vorteilhaft gegenüber Dosen aus Aluminium und/oder Kunststoff. Die Ökobilanz der gegenständlichen Dose fällt besser aus als jene von herkömmlichen Aludosen.

Die ifeu - Institut für Energie- und Umweltforschung Heidelberg GmbH hat für die gegenständliche Dose mit 330ml ein CO₂ Äquivalent von 225 kg/1000 1 ermittelt, während das CO₂ Äquivalent einer Aludose mit 330 ml mit 350 kg/1000 ermittelt wurde.

## Patentansprüche

1. Verfahren zur Herstellung einer Dose (1), enthaltend ein flüssiges und/oder ein gasförmiges Medium, das Überdruck aufweisen kann oder bei Transport oder Lagerung einen solchen entwickeln kann, wobei der zylindrische Dosenmantel (101) der Dose hauptsächlich aus Papier- bzw. Kartonmaterial besteht und zumindest zwei gewickelte Lagen umfasst und unten mit einem Verschlusselement in Form eines Bodenelements (4) und oben mit einem Verschlusselement in Form eines Deckelelements (5) verschlossen ist, wobei die innerste Lage des Dosenmantels (101) aus einer gerade gewickelten Barrierelage (102) besteht, welche eine in Längsrichtung der Dose (1) verlaufende Faltnaht mit sich selbst aufweist, wobei die Barrierelage (102) ein Laminat aus einer innenliegenden diffusionsdichten Folie oder einem innenliegenden diffusionsdichten Barrierelaminat (108) und einer außenliegenden Kraftpapierschicht (107) ist, wobei um die Barrierelage (102) des Dosenmantels (101) zumindest eine weitere gewickelte Lage aus Papier- bzw. Kartonmaterial vorliegt, wobei die aneinanderliegenden Karton- bzw. Papieroberflächen der Barrierelage (102) und der gewickelte Lage aus Papier- bzw. Kartonmaterial direkt aneinander verklebt, insbesondere verleimt, sind, **dadurch gekennzeichnet, dass** im ersten Schritt die Dosenmäntel mit einer kontinuierlich arbeitenden Wickelmaschine gefertigt werden, indem die einzelnen Lagen über einen Wickeldom aufgebracht werden und kontinuierlich miteinander verbunden werden, wobei die Barrierelage (102) bei der Wicklung mit einer in Längsrichtung verlaufenden Faltnaht versehen wird und nachfolgend das resultierende Rohr (27) zu einzelnen beidseitig offenen zylindrischen Hohlkörpern geschnitten wird,
dass im zweiten Schritt die beiden offenen Enden des zylindrischen Hohlkörpers nach außen hin aufgebogen werden, sodass die Enden einen kreisförmigen Querschnitt mit größerem Durchmesser gegenüber dem übrigen zylindrischen Hohlkörper aufweisen,
dass im dritten Schritt ein erstes Ende des zylindrischen Hohlkörpers mit einer Bördelungsvorrichtung (22) mit einem ersten der Verschlusselemente verschlossen wird,
dass im vierten Schritt der einseitig verschlossene Hohlkörper mit einer Füllvorrichtung (33) mit dem Medium befüllt wird,
dass im fünften Schritt der einseitig verschlossene, befüllte Hohlkörper mit einer Bördelungsvorrichtung (24) am anderen Ende mit einem zweiten der Verschlusselemente verschlossen wird,
wobei der vierte und der fünfte Schritt und bevorzugt auch der dritte Schritt, an einer Befüllungsanlage durchgeführt werden, welche zum Füllen und Verschluss von bekannten Aludosen geeignet ist.

2. Verfahren nach Anspruch 1, **dadurch gekennzeichnet, dass** im besagten ersten Schritt an der Wickelmaschine mit einer Düse (111) ein Klebstoff, insbesondere Leim, gezielt im Bereich der Faltnaht der gerade gewickelten Barrierelage (102) aufgebracht wird und zwar in jenem Bereich, wo die zwei Kraftpapierschichten (107) der Faltnaht aneinander zu liegen kommen.

3. Verfahren nach Anspruch 1 oder 2, **dadurch gekennzeichnet, dass** im besagten ersten Schritt an der Wickelmaschine mit einer Düse (113) ein Klebstoff, insbesondere ein Hotmelt (112), gezielt im Bereich der Längsnaht der äußersten in der Wickelmaschine aufgebrachten Lage aufgebracht wird, sodass die Längsnaht durch den Klebstoff, insbesondere durch Hotmelt (112), abgedichtet wird, bevor das resultierende Rohr (27) zu einzelnen beidseitig offenen zylindrischen Hohlkörpern geschnitten wird.

4. Verfahren nach einem der Ansprüche 1 bis 3, **dadurch gekennzeichnet, dass** nach dem ersten oder zweiten Schritt und jedenfalls vor dem dritten Schritt die Schnittränder des beidseitig offenen Hohlkörpers versiegelt werden, um die Aufnahmefähigkeit gegenüber Flüssigkeiten und/oder Gasen der an den Schnitträndern freiliegenden Papier- oder Kartonlagen herabzusetzen.

5. Verfahren nach einem der Ansprüche 1 bis 4, **dadurch gekennzeichnet, dass** die Wickelanlage und eine Maschine zur Bearbeitung der beiden offenen Enden des zylindrischen Hohlkörpers am Ort der Befüllungsanlage vorgesehen sind, sodass die Herstellung der Dosen ohne lange Transportwege und ohne große Vorratshaltung der Dosenmäntel erfolgt.

6. Verfahren nach Anspruch 5, **dadurch gekennzeichnet, dass** die Dosenmäntel von der Maschine zur Bearbeitung der beiden offenen Enden des zylindrischen Hohlkörpers ohne Zwischenlagerung der Transportvorrichtung der Befüllungsanlage zugeführt werden.

7. Verfahren nach einem der Ansprüche 1 bis 6, **dadurch gekennzeichnet, dass** die Befüllungsanlage zeitlich versetzt bzw. abwechselnd zum Füllen von Dosen (1), hergestellt nach einem Verfahren nach einem der Ansprüche 1 bis 6, und herkömmlichen Aludosen verwendet wird.

8. Verfahren nach Anspruch 7, **dadurch gekennzeichnet, dass** die Befüllungsanlage eine Transportvorrichtung für den Transport von Dosenmänteln durch die Anlage aufweist, wobei von Transportvorrichtung Dosenmäntel (101) aus Verbundmaterial, für Dosen (1), hergestellt nach einem Verfahren nach einem der Ansprüche 1 bis 6 und Dosenmäntel (117) aus Aluminium für herkömmlichen Aludosen zeitgleich transportiert werden, zur in einem gewissen Verhältnis abwechselnden Befüllung der unterschiedlichen Dosen.

9. Verfahren nach einem der Ansprüche 1 bis 8, **dadurch gekennzeichnet, dass** die Barrierelage (102) ein vorgefertigtes Laminat aus einem innenliegenden diffusionsdichten Barrierelaminat (108) und einer außenliegenden Kraftpapierschicht (107) ist, wobei die Barrierelage (102) eine Schichtdicke von 0,098 mm bis 0,145 mm aufweist, wobei die Kraftpapierschicht (107) der Barrierelage (102) eine Schichtdicke von 0,065 mm bis 0,090 mm aufweist und die diffusionsdichte Barrierefolie oder das diffusionsdichte Barrierelaminat (108) eine Schichtdicke von 0,033 mm bis 0,055 mm aufweist.

10. Verfahren nach einem der Ansprüche 1 bis 9, **dadurch gekennzeichnet, dass** im ersten Schritt außen über der Barrierelage (102) zumindest eine gewickelte Kraftpapierlage (103, 104) angebracht wird, deren innere Kraftpapieroberfläche mit der an ihr anliegenden Kraftpapieroberfläche der Barrierelage (102) verklebt, insbesondere verleimt, wird und deren äußere Kraftpapieroberfläche mit der Karton-, Papier- oder Kraftpapieroberfläche einer weiteren gewickelten Lage aus Papier- bzw. Kartonmaterial verklebt, insbesondere verleimt, wird.

11. Verfahren nach Anspruch 10, **dadurch gekennzeichnet, dass** im ersten Schritt außen über der ersten gewickelten Kraftpapierlage (103) eine zweite gewickelte Kraftpapierlage (104) angebracht wird, deren innere Kraftpapieroberfläche mit der an ihr anliegenden Kraftpapieroberfläche der ersten gewickelten Kraftpapierlage (103) verklebt, insbesondere verleimt, wird und deren äußere Kraftpapieroberfläche mit der Karton-, Papier- oder Kraftpapieroberfläche einer weiteren gewickelten Lage aus Papier- bzw. Kartonmaterial verklebt, insbesondere verleimt, wird.

12. Verfahren nach einem der Ansprüche 9 oder 10, **dadurch gekennzeichnet, dass** sich die erste Kraftpapierlage (103) und/oder die zweite Kraftpapierlage (104) nach dem Wickeln im ersten Schritt nicht selbst überlappt, oder im Überlappungsbereich mit sich selbst zumindest einen Randbereich mit reduzierter Dicke aufweist.

13. Verfahren nach einem der Ansprüche 1 bis 12, **dadurch gekennzeichnet, dass** die äußerste Lage des Dosenmantels (101) eine feuchtigkeitsbeständige äußere Barriereschicht (106) ist, welche als Beschichtung oder als Folienmaterial vorliegt.

14. Verfahren nach Anspruch 13, **dadurch gekennzeichnet, dass** die äußere Barriereschicht (106) des Dosenmantels (101) als Beschichtung oder auflaminierte Folie auf jenem Papier- oder Kartonmaterial vorliegt, das im ersten Schritt für die Wicklung der äußersten Lage des Schichtaufbaus verwendet wird, wobei das Papier- oder Kartonmaterial eine Stoßnaht mit sich selbst aufweist und wobei der Spalt der Stoßnaht durch die Beschichtung oder auflaminierte Folie selbst, einen aufgeklebten oder aufgeschweißten Streifen, eine versiegelnde Flüssigkeit, oder Hotmelt abgedichtet wird.

15. Verfahren nach Anspruch 13, **dadurch gekennzeichnet, dass** die äußerste Lage des Dosenmantels (101) eine feuchtigkeitsbeständige äußere Barriereschicht (106) ist, welche beim bereits geschnittenen einzelnen Dosenmantel (101) als Beschichtung oder in Form einer Folie oder einer Schrumpffolie aufgebracht wird.

## Claims

1. A method for producing a can (1) containing a liquid and/or gaseous medium which may have, or develop during transport or storage, excess pressure, wherein the cylindrical can shell (101) of the can consists mainly of paper and/or cardboard material and comprises at least two wound layers and is closed at the bottom with a closing element in the shape of a bottom element (4) and on top with a closing element in the shape of a lid element (5), wherein the innermost layer of the can shell (101) consists of a straight-wound barrier layer (102), which has a folded seam with itself running in a longitudinal direction of the can (1), wherein the barrier layer (102) is a laminate out of an interior diffusion-tight film or an interior diffusion-tight barrier laminate (108) and an exterior kraft paper sheet (107), wherein at least one other wound layer out of paper and/or cardboard material is present around the barrier layer (102) of the can shell (101), wherein the adjoining cardboard and/or paper surfaces of the barrier layer (102) and the wound layer out of paper and/or carboard material are directly adhered, in particular glued, to each other, **characterised in that**, in a first step, the can shells are manufactured with a continuously operating winding machine by applying the individual layers via a winding mandrel and continuously connecting them with each other, wherein the barrier layer (102) is provided with a longitudinally running folded seam during winding and then the resulting tube (27) is cut into individual cylindrical hollow bodies open on both sides,
**in that**, in a second step, the two open ends of the cylindrical hollow body are bent towards the outside such that the ends have a circular cross-section having a larger diameter than the rest of the cylindrical hollow body,
**in that**, in a third step, a first end of the cylindrical hollow body is closed with a first one of the closing elements using a crimping device (22),
**in that**, in a fourth step, the hollow body closed on one side is filled with the medium using a filling device (33),
**in that**, in a fifth step, the filled hollow body closed on one side is closed with a second one of the closing elements at the other end using a crimping device (24),
wherein the fourth and fifth steps and preferably also the third step are carried out at a filling system suitable for filling and closing known aluminium cans.

2. The method of claim 1, **characterised in that**, in said first step at the winding machine, an adhesive, in particular glue, is applied in a targeted manner in the area of the folded seam of the straight-wound barrier layer (102) using a nozzle (111), more specifically in the area where the two kraft paper sheets (107) of the folded seam adjoin.

3. The method of claim 1 or 2, **characterised in that**, in said first step at the winding machine, an adhesive, in particular a hot melt (112), is applied using a nozzle (113) in a targeted manner in the area of the longitudinal seam of the outermost layer applied in the winding machine such that the longitudinal seam is caulked by the adhesive, in particular by hot melt (112), before the resulting tube (27) is cut into individual cylindrical hollow bodies open on both sides.

4. The method of any one of claims 1 to 3, **characterised in that**, following the first or the second step and certainly prior to the third step, the cut edges of the hollow body open on both sides are sealed to reduce the receptivity of the paper or cardboard layers exposed at the cut edges for liquids and/or gases.

5. The method of any one of claims 1 to 4, **characterised in that** the winding system and a machine for processing the two open ends of the cylindrical hollow body are provided at the site of the filling system such that production of the cans takes place without any long transportation distances or extensive storage.

6. The method of claim 5, **characterised in that** the can shells are fed to the transportation device of the filling system from the machine without intermediate storage for processing the two open ends of the cylindrical hollow body.

7. The method of any one of claims 1 to 6, **characterised in that** the filling system is used at different times or alternately for filling cans (1) produced by a method of any one of claims 1 to 6 and for filling conventional aluminium cans.

8. The method of claim 7, **characterised in that** the filling system has a transportation device for transporting can shells through the system, wherein the transportation device simultaneously transports can shells (101) out of composite material for cans (1) produced by a method of any one of claims 1 to 6 and can shells (117) out of aluminium for conventional aluminium cans in order to fill those different cans alternating according to a certain proportion.

9. The method of any one of claims 1 to 8, **characterised in that** the barrier layer (102) is a prefabricated laminate out of an interior diffusion-tight barrier laminate (108) and an exterior kraft paper sheet (107), wherein the barrier layer (102) has a sheet thickness of 0.098 mm to 0.145 mm, wherein the kraft paper sheet (107) of the barrier layer (102) has a sheet thickness of 0.065 mm to 0.090 mm and the diffusion-tight barrier film or laminate (108) has a sheet thickness of 0.033 mm to 0.055 mm.

10. The method of any one of claims 1 to 9, **characterised in that**, in a first step, at least one wound kraft paper layer (103, 104) is applied over the barrier layer (102), the inner kraft paper surface of which is adhered, in particular glued, to the adjoining kraft paper surface of the barrier layer (102), and the outer kraft paper surface of which is adhered, in particular glued, to cardboard, paper or kraft paper surface of another wound layer out of paper and/or cardboard material.

11. The method of claim 10, **characterised in that**, in a first step, a second wound kraft paper layer (104) is applied over the first wound kraft paper layer (103), the inner kraft paper surface of which is adhered, in particular glued, to the adjoining kraft paper surface of the first wound kraft paper layer (103), and the outer kraft paper surface of which in particular glued, to cardboard, paper or kraft paper surface of another wound layer out of paper and/or cardboard material.

12. The method of any one of claims 9 and 10, **characterised in that** the first kraft paper layer (103) and/or the second kraft paper layer (104) does not overlap itself after winding in the first step or at least has an edge area of reduced thickness in the area of overlapping with itself.

13. The method of any one of claims 1 to 12, **characterised in that** the outermost layer of the can shell (101) is a moisture-resistant outer barrier sheet (106), which is present as a coating or film material.

14. The method of claim 13, **characterised in that** the outer barrier layer (106) of the can shell (101) is present as a coating or laminated film on that paper or cardboard material which is used in the first step for winding the outermost layer of the sheet structure, wherein the paper of cardboard material has a butt joint seam with itself, and wherein the gap of the butt joint seam is sealed by the coating or laminate film itself, a strap glued or welded on, a sealing liquid or hot melt.

15. The method of claim 13, **characterised in that** the outermost layer of the can shell (101) is a moisture-resistant outer barrier layer (106), which is applied to the already cut individual can shell (101) as a coating or in the shape of a film or shrink film.

## Revendications

1. Procédé de fabrication d'une boîte ronde (1) contenant un milieu liquide et/ou un milieu gazeux qui peut présenter une surpression ou qui peut développer une telle surpression lors du transport ou du stockage, l'enveloppe cylindrique (101) de la boîte ronde étant composée principalement de papier ou de carton et comprenant au moins deux couches enroulées et étant fermée en bas par un élément de fermeture sous la forme d'un élément de fond (4) et en haut par un élément de fermeture sous la forme d'un élément de couvercle (5), la couche la plus intérieure de l'enveloppe (101) de la boîte ronde étant constituée d'une couche barrière (102) enroulée de manière rectiligne, qui présente avec elle-même un joint de pliage s'étendant dans la direction longitudinale de la boîte ronde (1), la couche barrière (102) étant un stratifié constitué d'une feuille interne étanche à la diffusion ou d'un stratifié barrière interne étanche à la diffusion (108) et d'une couche de papier kraft externe (107), au moins une autre couche enroulée en papier ou en carton étant disposée autour de la couche barrière (102) de l'enveloppe (101) de la boîte ronde, les surfaces de carton ou de papier adjacentes de la couche barrière (102) et de la couche enroulée de papier ou de carton étant collées directement l'une sur l'autre, **caractérisé en ce que**, dans une première étape, les enveloppes des boîtes rondes sont fabriquées à l'aide d'une machine d'enroulement travaillant en continu en appliquant les différentes couches sur un mandrin d'enroulement et en les reliant entre elles en continu, la couche barrière (102) étant pourvue, lors de l'enroulement, d'un joint de pliage s'étendant dans la direction longitudinale et le tube (27) résultant étant ensuite découpé en corps creux cylindriques individuels ouverts des deux côtés,
**en ce que**, dans une deuxième étape, les deux extrémités ouvertes du corps creux cylindrique sont pliées vers l'extérieur, de sorte que les extrémités présentent une section transversale circulaire de plus grand diamètre que le reste du corps creux cylindrique,
**en ce que**, dans une troisième étape, une première extrémité du corps creux cylindrique est fermée avec un premier des éléments de fermeture à l'aide d'un dispositif de sertissage (22),
**en ce que**, dans une quatrième étape, le corps creux fermé d'un côté est rempli avec un milieu à l'aide d'un dispositif de remplissage (33),
**en ce que**, dans une cinquième étape, le corps creux rempli, fermé d'un côté, est fermé à l'autre extrémité avec un deuxième des éléments de fermeture à l'aide d'un dispositif de sertissage (24),
la quatrième et la cinquième étape, et de préférence également la troisième étape, étant effectuées sur une installation de remplissage qui est appropriée pour remplir et fermer des canettes en aluminium connues.

2. Procédé selon la revendication 1, **caractérisé en ce que**, dans ladite première étape sur la machine d'enroulement, un adhésif, en particulier de la colle, est appliqué à l'aide d'une buse (111) de manière ciblée dans la zone du joint de pliage de la couche barrière (102) qui vient d'être enroulée, à savoir dans la zone où les deux couches de papier kraft (107) du joint de pliage viennent se placer l'une contre l'autre.

3. Procédé selon la revendication 1 ou 2, **caractérisé en ce que**, dans ladite première étape sur la machine d'enroulement, un adhésif, en particulier de la colle thermofusible (112), est appliquée à l'aide d'une buse (113) de manière ciblée dans la zone du joint longitudinal de la couche la plus extérieure appliquée dans la machine d'enroulement, de sorte que le joint longitudinal est rendu étanche par l'adhésif, en particulier par la colle thermofusible (112), avant que le tube résultant (27) soit découpé en corps creux cylindriques individuels ouverts des deux côtés.

4. Procédé selon l'une des revendications 1 à 3, **caractérisé en ce qu'**après la première ou la deuxième étape et en tout cas avant la troisième étape, les bords de coupe du corps creux ouvert sur les deux côtés sont scellés afin de réduire la capacité d'absorption vis-à-vis des liquides et/ou des gaz des couches de papier ou de carton exposées aux bords de coupe.

5. Procédé selon l'une des revendications 1 à 4, **caractérisé en ce que** l'installation d'enroulement et une machine pour le traitement des deux extrémités ouvertes du corps creux cylindrique sont prévues sur le lieu de l'installation de remplissage, de sorte que la fabrication des boîtes rondes s'effectue sans longs trajets de transport et sans grand stockage des enveloppes des boîtes rondes.

6. Procédé selon la revendication 5, **caractérisé en ce que** les enveloppes des boîtes rondes sont amenées au dispositif de transport de l'installation de remplissage par la machine de traitement des deux extrémités ouvertes du corps creux cylindrique sans être entreposées.

7. Procédé selon l'une des revendications 1 à 6, **caractérisé en ce que** l'installation de remplissage est utilisée de manière décalée dans le temps ou en alternance pour remplir des boîtes rondes (1) fabriquées selon un procédé selon l'une des revendications 1 à 6 et des canettes en aluminium traditionnelles.

8. Procédé selon la revendication 7, **caractérisé en ce que** l'installation de remplissage comprend un dispositif de transport pour le transport d'enveloppes des boîtes rondes à travers l'installation, le dispositif de transport transportant simultanément des enveloppes (101) des boîtes rondes en matériau composite, pour des boîtes rondes (1) fabriquées par un procédé selon l'une des revendications 1 à 6, et des enveloppes (117) en aluminium pour des canettes en aluminium traditionnelles pour que les différentes boîtes rondes soient remplies d'une manière alternée dans une certaine proportion.

9. Procédé selon l'une des revendications 1 à 8, **caractérisé en ce que** la couche barrière (102) est un stratifié préfabriqué constitué d'un stratifié barrière (108) étanche à la diffusion situé à l'intérieur et d'une couche de papier kraft (107) située à l'extérieur, la couche barrière (102) ayant une épaisseur de couche de 0,098 mm à 0,145 mm, la couche de papier kraft (107) de la couche barrière (102) ayant une épaisseur de couche de 0,065 mm à 0,090 mm et la feuille barrière étanche à la diffusion ou le stratifié barrière étanche à la diffusion (108) ayant une épaisseur de couche de 0,033 mm à 0,055 mm.

10. Procédé selon l'une des revendications 1 à 9, **caractérisé en ce que**, dans ladite première étape, au moins une couche enroulée de papier kraft (103, 104) dont la surface intérieure de papier kraft adhère, en particulier par moyen de la colle, à la surface adjacente de papier kraft de la couche barrière (102), et dont la surface extérieure de papier kraft adhère, en particulier par moyen de la colle, à la surface de carton, de papier ou de papier kraft d'une autre couche enroulée de papier ou de carton est appliquée à l'extérieur, au-dessus de la couche barrière (102).

11. Procédé selon la revendication 10, **caractérisé en ce que**, dans ladite première étape, une deuxième couche enroulée de papier kraft (104) dont la surface intérieure de papier kraft adhère, en particulier par moyen de la colle, à la surface adjacente de papier kraft de la première couche enroulée de papier kraft (103), et dont la surface extérieure de papier kraft adhère, en particulier par moyen de la colle, à la surface de carton, de papier ou de papier kraft d'une autre couche enroulée de papier ou de carton est appliquée à l'extérieur, au-dessus de la première couche enroulée de papier kraft (103).

12. Procédé selon l'une des revendications 9 ou 10, **caractérisé en ce que** la première couche de papier kraft (103) et/ou la deuxième couche de papier kraft (104) ne se chevauchent pas elles-mêmes après avoir été enroulées lors de la première étape, ou présentent dans la zone de chevauchement avec elles-mêmes au moins une zone marginale d'épaisseur réduite.

13. Procédé selon l'une des revendications 1 à 12, **caractérisé en ce que** la couche la plus extérieure de l'enveloppe (101) de la boîte ronde est une couche barrière extérieure (106) résistante à l'humidité, qui se présente sous forme de revêtement ou de matériau en feuille.

14. Procédé selon la revendication 13, **caractérisé en ce que** la couche barrière extérieure (106) de l'enveloppe (101) de la boîte ronde existe sous la forme d'un revêtement ou d'une feuille stratifiée sur le matériau de papier ou de carton utilisé pour enrouler la couche la plus extérieure de la structure stratifiée dans la première étape, ledit matériau de papier ou de carton présentant une souture bout-à-bout avec lui-même et l'espace de la souture est scellé par le revêtement lui-même ou la feuille stratifiée elle-même, une bande collée ou soudée, un liquide de scellement ou une colle thermofusible.

15. Procédé selon la revendication 13, **caractérisé en ce que** la couche la plus extérieure de l'enveloppe (101) de la boîte ronde est une couche barrière extérieure (106) résistante à l'humidité, qui est appliquée comme revêtement ou sous forme d'une feuille ou d'une feuille rétractable sur une enveloppe (101) individuelle après que celle-ci a été coupée.
